# EUROPEAN PATENT APPLICATION

(11) **EP 4 841 415 A1**
(43) Date of publication of application: **18.11.2026**
(21) Application number: 24921398.4
(22) Date of filing: 29.08.2024
(51) Int. Cl.: G06F 3/04883

(54) **LAYOUT DISPLAY METHOD AND RELATED DEVICE**

(30) Priority: 31.01.2024 CN 202410144601
(71) Applicant: Huawei Technologies Co., Ltd., Shenzhen, Guangdong 518129 (CN)
(72) Inventor: DANG, Wang, Shenzhen, Guangdong 518129 (CN); CUI, Yirui, Shenzhen, Guangdong 518129 (CN); ZHANG, Lei, Shenzhen, Guangdong 518129 (CN)
(74) Representative: Goddar, Heinz J.
(86) International application number: PCT/CN2024/115406
(87) International publication number: WO 2025/161372

(57) **Abstract**

This application provides a whiteboard page display method, including: receiving a gesture input and displaying a first whiteboard page, where the first whiteboard page is written content of the gesture input, and the written content includes a plurality of written elements; and receiving a first whiteboard page switching instruction for the first whiteboard page, and replacing, based on the first whiteboard page switching instruction, the first whiteboard page with a second whiteboard page for display. The second whiteboard page includes a part of the plurality of written elements. The part of the written elements corresponds to a same user intention, and a written element that is included in the first whiteboard page but not included in the second whiteboard page and the part of the written elements do not correspond to a same user intention. Gesture input time of the written element that is not included is earlier than gesture input time of at least one written element in the part of the written elements. In this manner, the resulting whiteboard page can present more explicit and complete written content, thereby improving user experience.

## Description

This application claims priority to Chinese Patent Application No. 202410144601.3, filed with the China National Intellectual Property Administration on January 31, 2024 and entitled "WHITEBOARD PAGE DISPLAY METHOD AND RELATED DEVICE", which is incorporated herein by reference in its entirety.

### TECHNICAL FIELD

This application relates to the field of terminal software, and in particular, to a whiteboard page display method and a related device.

### BACKGROUND

With the rapid development of the internet and communication technologies, office informatization is increasingly becoming an important part of the overall IT service system. Interactive touch-control display devices (for example, interactive electronic whiteboards), which provide the most direct user interaction, have become increasingly popular and are now standard equipment for digital conferences. The electronic whiteboards are generally applicable to multi-person discussion scenarios and serve functions similar to those of blackboards.

In complex writing scenarios, intelligent whiteboard devices with a handwriting recognition capability often suffer from a low recognition rate or even failure to recognize handwriting. A major cause is that users generate a large quantity of unnecessary strokes when writing. When a user writes on the intelligent electronic whiteboard, the user usually revises and edits written content repeatedly as ideas evolve during writing, which may result in loss of important information. When a plurality of users use the electronic whiteboard, they may write simultaneously or overwrite existing content on a same whiteboard page. As a result, handwriting cannot be accurately recognized, and important information is lost. When the whiteboard is used for a meeting, numerous unnecessary strokes, such as emphasis lines, underlines, and circles, are drawn for different key points, which diminishes the prominence of essential content. In this case, if the user wants to save clear and well-organized written content, the user can only erase and rewrite the content, or frequently perform manual or automatic whiteboard page saving during writing. This greatly affects input efficiency and degrades user experience.

### SUMMARY

A first aspect of embodiments of this application provides a whiteboard page display method. The method includes: receiving an input and displaying a first whiteboard page, where the first whiteboard page is written content of the input, and the written content includes a plurality of written elements; and receiving a first whiteboard page switching instruction for the first whiteboard page, and replacing, based on the first whiteboard page switching instruction, the first whiteboard page with a second whiteboard page for display, where the second whiteboard page includes a part of the plurality of written elements, the part of the written elements corresponds to a same user intention, a written element that is included in the first whiteboard page but not included in the second whiteboard page and the part of the written elements do not correspond to a same user intention, and input time of the written element that is not included is earlier than input time of at least one written element in the part of the written elements.

When key content cannot be identified or a whiteboard page is disordered due to interference information (for example, redundant written content or written content entered by different users), in embodiments of this application, redundant information in the whiteboard page can be identified, and the redundant information can be removed to reproduce a whiteboard page that includes key information. The redundant information may be considered as information that is different from a main semantic meaning of the whiteboard page. When entering information, a user usually has one or more input intentions. In other words, a part of inputs of the user may correspond to a same user intention, and another part of the inputs may correspond to another user intention. Alternatively, written content entered by different users corresponds to different user intentions. That the part of the inputs may correspond to the same user intention described herein may be understood as that written content of non-redundant content entered by the user to express same theme content may correspond to a same user intention. Generally, the same theme content corresponds to a same semantic meaning.

The redundant content may be understood as that semantic integrity of the whiteboard page is not affected when the content is missing.

The input may specifically be a gesture input.

A train of thought of embodiments of this application is that input information of the user may be recorded, and when the user needs to reproduce a historical whiteboard page (which may also be described as that the user requests to perform whiteboard page switching), redundant information in a whiteboard page may be removed, so that written content with a same user intention is reproduced. In this manner, the resulting whiteboard page can present more explicit and complete written content, thereby improving user experience.

In embodiments of this application, the second whiteboard page may be a whiteboard page obtained by reconstructing the first whiteboard page. Compared with the first whiteboard page, in the second whiteboard page, an element that does not belong to the same user intention is removed. Because the removal operation is not performed based on time similar to input time of the user, input time of the removed element is earlier than input time of the part of the elements that are retained (a written element that is later than the removed element is retained because the written element and another retained element belong to the same user intention). The written elements included in the second whiteboard page are determined based on whether corresponding user intentions are consistent. Compared with the conventional technology in which whiteboard page reproduction is performed only by considering a sequence of input time, in embodiments of this application, whiteboard page reproduction is performed based on a user intention of an input.

In embodiments of this application, the first whiteboard page may be a whiteboard page obtained after the input of the user is received. The user usually has a plurality of themes during entering or may enter some content that visually affects important content (namely, redundant content). In this case, the user may have a requirement to reproduce one or more specified historical whiteboard pages. Each whiteboard page may correspond to one user intention, so that the user can easily view whiteboard page content that is clear and has a definite theme. Written content having the same user intention may be content that has a same semantic meaning and includes no redundant information.

In a possible implementation, the written element is one or more complete strokes.

In a possible implementation, the same user intention includes: written elements entered by a same user; or written elements that affect semantic integrity of written content included in the second whiteboard page when the written elements are missing.

In a possible implementation, receiving the first whiteboard page switching instruction for the first whiteboard page includes: receiving a selection instruction for a part of the written content in the first whiteboard page, and a whiteboard page switching instruction for the part of the written content, where the part of the written elements belongs to the part of the written content; or receiving a selection instruction for all the written content in the first whiteboard page, and a whiteboard page switching instruction for all the written content.

When the user expects to reproduce the one or more specified historical whiteboard pages, the user may enter the first whiteboard page switching instruction for the first whiteboard page. The first whiteboard page switching instruction may instruct to reconstruct a whiteboard page based on a part or all of the written content in the first whiteboard page.

In a possible implementation, some elements in the first whiteboard page may be further specified as not being eliminated during whiteboard page reconstruction. For example, a pin instruction for a target element in the plurality of written elements may be received, where the pin instruction instructs to keep displaying the target element when the first whiteboard page is replaced with the second whiteboard page (a reconstructed whiteboard page) for display. For example, circle-selected content may be identified as a minimum unit. The user may tap to select a unit, and may select to pin or eliminate the unit. In addition, same units may be identified, and an overall operation may be performed on the same units. After the unit is selected to be pinned or eliminated, the unit is not affected by sliding of a slider.

In the foregoing manner, space for optional operations is provided for the user, so that the user can select to pin or eliminate important unit information.

In a possible implementation, the first whiteboard page switching instruction is generated in response to a sliding operation on the slider.

In a possible implementation, replacing the first whiteboard page with the second whiteboard page for display includes: causing a part of the written elements in the first whiteboard page to disappear in sequence until the second whiteboard page is displayed.

In a possible implementation, causing the part of the written elements in the first whiteboard page to disappear in sequence includes:
causing the part of the written elements in the first whiteboard page to disappear in sequence based on degrees of relevance between the written elements and the user intention.

In a possible implementation, the first whiteboard page switching instruction is generated in response to an operation on a plurality of candidate whiteboard pages, each candidate whiteboard page includes a part of the plurality of written elements, each candidate whiteboard page corresponds to the same user intention, and different candidate whiteboard pages are different from one another.

In a possible implementation, the method further includes: caching data of the input corresponding to the first whiteboard page; and determining display content of the second whiteboard page based on the data.

After the input data is recorded, the input data may be cached, and subsequent redundant information identification and whiteboard page generation operations are performed only when the user requests to switch the whiteboard page, thereby reducing overheads of compute resources.

In a possible implementation, determining the display content of the second whiteboard page based on the data is performed after receiving the first whiteboard page switching instruction for the first whiteboard page.

In a possible implementation, determining the display content of the second whiteboard page based on the data includes: determining, based on the data through a language model, display content of the plurality of candidate whiteboard pages including the second whiteboard page, where each candidate whiteboard page corresponds to the same user intention, and different candidate whiteboard pages are different from one another.

In a possible implementation, the data includes at least one of the following: static features of the written elements, a relationship between static features of adjacent written elements in space, a relationship between static features of adjacent written elements in time, and action features of the written elements.

In embodiments of this application, features are constructed based on time, space, and semantic information of a stroke, so that a recognition result is more accurate.

According to a second aspect, this application provides a whiteboard page display apparatus, where the apparatus includes a processing module and a display module.

The processing module is configured to: receive an input, and control the display module to display a first whiteboard page, where the first whiteboard page is written content of the input, and the written content includes a plurality of written elements; and receive a first whiteboard page switching instruction for the first whiteboard page, and control, based on the first whiteboard page switching instruction, the display module to replace the first whiteboard page with a second whiteboard page for display, where the second whiteboard page includes a part of the plurality of written elements, the part of the written elements corresponds to a same user intention, a written element that is included in the first whiteboard page but not included in the second whiteboard page and the part of the written elements do not correspond to a same user intention, and input time of the written element that is not included is earlier than input time of at least one written element in the part of the written elements.

The input may specifically be a gesture input.

In a possible implementation, the written elements included in the second whiteboard page are determined based on whether corresponding user intentions are consistent.

In a possible implementation, the written element is one or more complete strokes.

In a possible implementation, the same user intention includes:
written elements entered by a same user; or
written elements that affect semantic integrity of written content included in the second whiteboard page when the written elements are missing.

In a possible implementation, the processing module is specifically configured to:
receive a selection instruction for a part of the written content in the first whiteboard page, and a whiteboard page switching instruction for the part of the written content, where the part of the written elements belongs to the part of the written content; or
receive a selection instruction for all the written content in the first whiteboard page, and a whiteboard page switching instruction for all the written content.

In a possible implementation, before replacing the first whiteboard page with the second whiteboard page for display, the processing module is further configured to:
receive a pin instruction for a target element in the plurality of written elements, where the pin instruction instructs to keep displaying the target element when the first whiteboard page is replaced with the second whiteboard page for display.

In a possible implementation, the first whiteboard page switching instruction is generated in response to a sliding operation on a slider.

In a possible implementation, the processing module is specifically configured to control the display module to cause a part of the written elements in the first whiteboard page to disappear in sequence until the second whiteboard page is displayed.

In a possible implementation, causing the part of the written elements in the first whiteboard page to disappear in sequence includes:
causing the part of the written elements in the first whiteboard page to disappear in sequence based on degrees of relevance between the written elements and the user intention.

In a possible implementation, the first whiteboard page switching instruction is generated in response to an operation on a plurality of candidate whiteboard pages, each candidate whiteboard page includes a part of the plurality of written elements, each candidate whiteboard page corresponds to the same user intention, and different candidate whiteboard pages are different from one another.

In a possible implementation, the processing module is further configured to:
cache data of the input corresponding to the first whiteboard page; and
determine display content of the second whiteboard page based on the data.

In a possible implementation, determining the display content of the second whiteboard page based on the data is performed after receiving the first whiteboard page switching instruction for the first whiteboard page.

In a possible implementation, the processing module is specifically configured to:
determine, based on the data through a language model, display content of the plurality of candidate whiteboard pages including the second whiteboard page, where each candidate whiteboard page corresponds to the same user intention, and different candidate whiteboard pages are different from one another.

In a possible implementation, the data includes at least one of the following:
static features of the written elements, a relationship between static features of adjacent written elements in space, a relationship between static features of adjacent written elements in time, and action features of the written elements.

According to a third aspect, this application provides an electronic device, including: a processor, a memory, a touchscreen, and a bus. The processor, the memory, and the touchscreen are connected through the bus.

The memory is configured to store a computer program or instructions.

The processor is configured to invoke or execute the program or the instructions stored in the memory, and is further configured to invoke the touchscreen, to implement the steps according to any one of the first aspect or the possible implementations of the first aspect.

According to a fourth aspect, this application provides a computer storage medium, including computer instructions. When the computer instructions are run on an electronic device or a server, the steps according to any one of the first aspect and the possible implementations of the first aspect are performed.

According to a fifth aspect, this application provides a computer program product. When the computer program product runs on an electronic device or a server, the steps according to any one of the first aspect and the possible implementations of the first aspect are performed.

According to a sixth aspect, this application provides a chip system. The chip system includes a processor, configured to support an execution device or a training device to implement functions in the foregoing aspects, for example, send or process data or information in the foregoing method. In a possible design, the chip system further includes a memory. The memory is configured to store program instructions and data that are necessary for the execution device or the training device. The chip system may include a chip, or may include a chip and another discrete component.

### BRIEF DESCRIPTION OF DRAWINGS

FIG. 1 is a diagram of a structure of a product according to an embodiment of this application;
FIG. 2 is a block diagram of a structure of an electronic device according to an embodiment of this application;
FIG. 3 is a diagram of an embodiment of a whiteboard page display method according to an embodiment of this application;
FIG. 4, FIG. 5B, FIG. 6, FIG. 9B, FIG. 10, and FIG. 13A to FIG. 13C are whiteboard page diagrams according to an embodiment of this application;
FIG. 5A-1 to FIG. 5A-3, FIG. 7A to FIG. 9A-1 to FIG. 9A-3, FIG. 11A to FIG. 11C, and FIG. 12A to FIG. 12D are gesture diagrams according to an embodiment of this application;

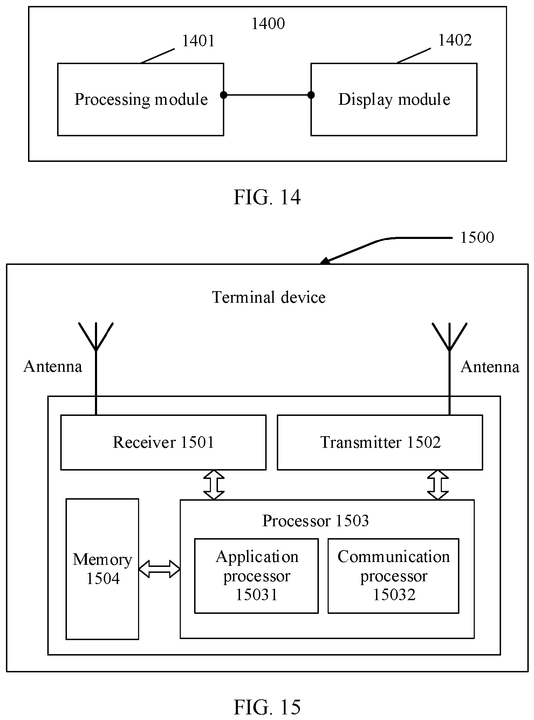

FIG. 14 is a diagram of a structure of a whiteboard page display apparatus according to an embodiment of this application; and
FIG. 15 is a diagram of a structure of a terminal device according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, system, product, or device.

An example operating environment of this application is first described.

Embodiments of this application may be applied to a system 100 including a touchscreen 103.

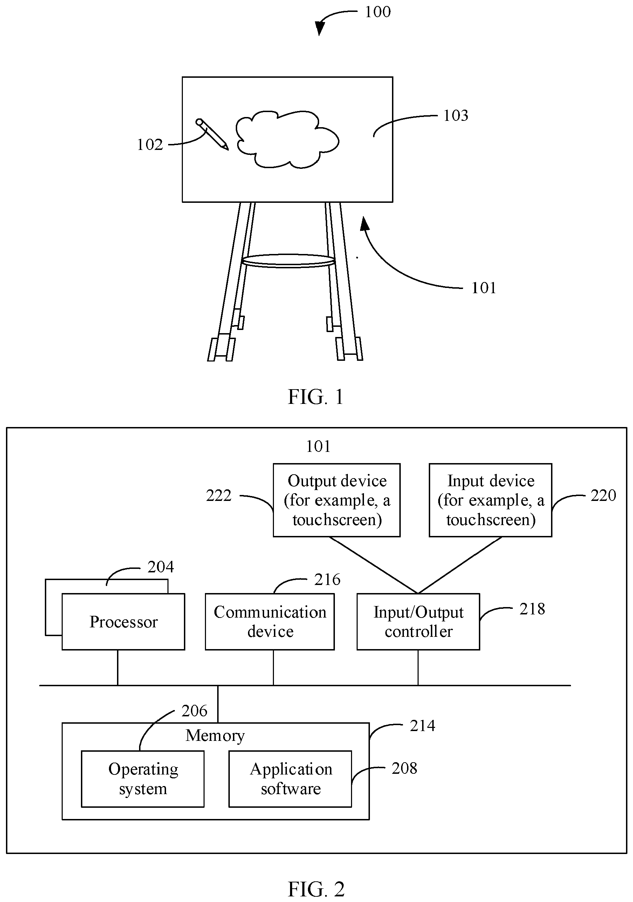

Refer to FIG. 1. FIG. 1 shows the system 100 to which embodiments of this application are applied. The system 100 may include an electronic device 101 and a stylus 102 associated with the electronic device 101.

The electronic device 101 may be an electronic whiteboard (or referred to as an interactive electronic smartboard) shown in FIG. 1, and the electronic device 101 includes the touchscreen 103. It should be understood that the electronic device 101 may also be a portable mobile device including a touchscreen, for example, but not limited to a mobile or portable compute device (for example, a smartphone), a personal computer, a server computer, a handheld device (for example, a tablet) or a laptop device, a multiprocessor system, a game console or controller, a microprocessor-based system, a set-top box, a programmable consumer electronic product, a mobile phone, a mobile computing and/or communication device having a wearable or accessory shape factor (for example, a watch, glasses, a headset, or an earplug), a network PC, a small computer, a mainframe computer, and a distributed computing environment including any of the above systems or devices.

The touchscreen 103 can identify a contact gesture of a user.

In an implementation, the touchscreen 103 may be an infrared touchscreen (infrared touchscreen). The infrared touchscreen includes infrared emission and reception sensing components installed on an outer frame of the touchscreen, and an infrared detection network is formed on a surface of the screen. Any object that performs a touch operation may change an infrared ray on a touch point to implement a touchscreen operation. An implementation principle of the infrared touchscreen is similar to that of a surface acoustic wave touchscreen. The infrared touchscreen uses the infrared emission and reception sensing components. These components form the infrared detection network on the surface of the screen. An object (for example, contact between a side surface of a hand and the touchscreen 103 in embodiments of this application) that performs a touch operation may change an infrared ray on a touch point, and then an infrared signal is converted into a coordinate position of the touch point, so that a touch gesture is recognized.

In an implementation, the touchscreen 103 may be a capacitive touchscreen, and the capacitive touchscreen works by using current sensing of a human body. For example, the capacitive touchscreen may be a four-layer composite glass screen. An inner surface and an interlayer of the glass screen are each coated with one layer of ITO (nano-indium tin metal oxide). An outermost layer is a thin silicone glass protective layer. An interlayer ITO coating is used as a working surface. Four electrodes are led out from four corners. Inner layer ITO is a shield layer, which can ensure a good working environment. When the hand of the user touches a metal layer (for example, the contact between the side surface of the hand and the touchscreen 103 in embodiments of this application), the user and the surface of the touchscreen form a coupling capacitor due to an electric field of the human body. For a highfrequency current, the capacitor is a direct conductor, and a finger draws a small current from a contact point. The current flows out separately from the electrodes on the four corners of the touchscreen, and currents flowing through the four electrodes are proportional to distances between the finger and the four corners. A controller obtains a position of the touch point by accurately calculating a ratio of the four currents, so as to recognize the touch gesture.

It should be understood that the touchscreen 103 may alternatively be another type of touchscreen that has a contact gesture recognition capability, or may be replaced with a touchscreen that has only a display function but can cooperate with another external device (for example, a sensor) to implement contact gesture recognition. This is not limited herein.

In an example, the stylus 102 may also interact with the touchscreen 103 by touching the touchscreen 103 or in another manner, to provide an input for the electronic device 101.

The touchscreen 103 may display a pattern and text, and may further provide a handwriting or drawing screen for the user to freely write and draw, for example, a whiteboard screen provided by an electronic whiteboard or a sketchpad provided by an application (application, APP).

In embodiments of this application, the user may come into contact with the touchscreen 103 by using the side surface of the hand, and the electronic device 101 may trigger display of a whiteboard page after detecting a contact gesture of the user.

The foregoing describes the example operating environment of this application. The following describes an internal structure of the electronic device 101 with reference to an example.

Refer to FIG. 2. FIG. 2 is a diagram of a structure of the electronic device 101 according to an embodiment of this application.

It may be understood that the structure shown in FIG. 2 does not constitute any specific limitation on the electronic device 101. In some other embodiments of this application, the electronic device 101 may include more or fewer components than those shown in the figure, or some components may be combined, or some components may be split, or different component arrangements may be used. The components shown in the figure may be implemented by hardware, software, or a combination of software and hardware.

The electronic device 101 may include an input/output controller 218. The input/output controller 218 may output information to one or more output devices 222 (for example, a touchscreen or a speaker) that are separated from or integrated into the electronic device 101. The input/output controller 218 may be further configured to receive an input from one or more input devices 220 (for example, a keyboard, a microphone, or a touchscreen). In an embodiment, the output device 222 may also act as the input device 220. An example of such a device may be a touchscreen. In some embodiments, a user may provide an input for the input device 220 and/or receive an output from the output device 222.

In embodiments of this application, the input device 220 may be a touchscreen. The user provides a gesture input for the input/output controller 218 by touching the touchscreen by using a side surface of a hand. The input/output controller 218 may transfer the gesture input to a processor, and the processor 204 performs processing.

The electronic device 101 may include one or more processors 204. The processors may include one or more processing units. For example, the processor 204 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

A controller of the processor 204 may generate an operation control signal based on an instruction operation code and a time sequence signal, to complete control of instruction reading and instruction execution.

A memory may be further disposed in the processor 204, and is configured to store instructions and data. In some embodiments, the memory in the processor 204 is a cache. The memory may store instructions or data just used or cyclically used by the processor 204. If the processor 204 needs to use the instructions or the data again, the processor may directly invoke the instructions or the data from the memory. This avoids repeated access, reduces waiting time of the processor 204, and improves system efficiency.

In some embodiments, the processor 204 may include one or more interfaces. For example, the interface may include, but is not limited to, a mobile industry processor interface (mobile industry processor interface, MIPI), an external memory interface, and/or a universal serial bus (universal serial bus, USB) interface.

The MIPI interface may be configured to connect the processor 204 to a peripheral component like a touchscreen. The MIPI interface may include a display serial interface (display serial interface, DSI) and the like. The processor 204 communicates with the touchscreen through the DSI interface, to implement a display function of the touchscreen.

It may be understood that an interface connection relationship between the modules shown in embodiments is merely an example for description, and does not constitute a limitation on the structure of the electronic device 101. In some other embodiments of this application, the electronic device 101 may alternatively use an interface connection manner different from that in the foregoing embodiments, or use a combination of a plurality of interface connection manners.

The electronic device 101 may implement a display function by using the GPU, the touchscreen, the application processor, and the like. The GPU is a microprocessor for image processing, and is connected to the touchscreen and the application processor. The GPU is configured to: perform mathematical and geometric computation, and render an image. The processor 204 may include one or more GPUs that execute program instructions to generate or change display information. Specifically, one or more GPUs in the processor 204 may implement a rendering task of an image (for example, a rendering task related to a whiteboard page, a distance value, a length value, and the like in this application), and transfer a rendering result to the application processor or another display driver, and the application processor or the another display driver triggers a display to display the whiteboard page, the distance value, the length value, and the like.

The touchscreen may include a display and a related sensor (for example, a pressure sensor and a touch sensor).

The display is configured to display an image, a video, and the like. The display includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like.

The pressure sensor is configured to sense a pressure signal, and can convert the pressure signal into an electrical signal. There are many types of pressure sensors such as a resistive pressure sensor, an inductive pressure sensor, and a capacitive pressure sensor. The capacitive pressure sensor may include at least two parallel plates made of conductive materials. When a force is applied to the pressure sensor, capacitance between electrodes changes. The electronic device 101 may determine an intensity of pressure based on the change in the capacitance. When a touch operation is performed on the touchscreen, the electronic device 101 may detect an intensity of the touch operation by using the pressure sensor. The electronic device 101 may also calculate a touch position based on a detection signal of the pressure sensor. In some embodiments, touch operations that are performed at a same touch position but have different touch operation intensities may correspond to different operation instructions.

The touch sensor is also referred to as a "touch component". The touch sensor may be disposed on the touchscreen, and the touch sensor and the display constitute the touchscreen. The touch sensor is configured to detect a touch operation performed on or near the touch sensor. The touch sensor may transfer the detected touch operation to the application processor to determine a type of the touch event. A visual output related to the touch operation may be provided through the display. In some other embodiments, the touch sensor may be alternatively disposed on a surface of the electronic device 101, and is at a position different from that of the display.

The NPU is a neural-network (neural-network, NN) computing processor. The NPU quickly processes input information by referring to a structure of a biological neural network, for example, a transfer mode between human brain neurons, and may further continuously perform self-learning. Applications such as intelligent cognition of the electronic device 101 may be implemented through the NPU. For example, a task of recognizing a touch gesture type may be implemented based on the NPU.

The interface for external memory may be used to connect to an external storage card, for example, a micro SD card, to extend a storage capability of the electronic device 101. The external storage card communicates with the processor 204 through the interface for external memory, to implement a data storage function. For example, files such as music and a video may be stored in the external storage card.

The memory 214 may be configured to store computer-executable program code. The executable program code includes instructions. The memory 214 may include a program storage region and a data storage region. The program storage region may store an operating system 206, application software 208 required by at least one function (for example, an image playing function), and the like. The data storage region may store data (for example, image data) and the like created when the electronic device 101 is used. In addition, the memory 214 may include a high-speed random access memory, and may further include a non-volatile memory, for example, at least one magnetic disk storage device, a flash memory device, or a universal flash storage (universal flash storage, UFS). The processor 204 runs the instructions stored in the memory 214 and/or instructions stored in a memory disposed in the processor, to perform various function applications and data processing of the electronic device 101.

The method described in embodiments of this application may be code stored in the memory 214 (or an external memory), and the processor 110 may obtain the code in the memory to implement the method provided in embodiments of this application.

Alternatively, the electronic device 101 may interact with another electronic device by using a communication device 216.

It is understood that alternatively or additionally, the methods described herein may be performed, at least in part, by one or more hardware logic components. For example and not limitation, illustrative types of the hardware logic components that can be used include a field programmable logic gate array (field programmable gate array, FPGA), an application specific integrated circuit (application specific integrated circuit, ASIC), an application specific standard part (application specific standard part, ASSP), a system on chip (system on chip, SOC), a programmable logic device (programmable logic device, PLD), and the like. For example, functions such as contact gesture detection and gesture type determining may be implemented based on a hardware logic component.

In addition, at least some functions of various elements in the accompanying drawings may be performed in a distributed manner by other elements in the accompanying drawings or entities (for example, a processor, a web service, a server, an application, and a compute device) that are not shown in the accompanying drawings. This is not limited herein.

In complex writing scenarios, intelligent whiteboard devices with a handwriting recognition capability often suffer from a low recognition rate or even failure to recognize handwriting. A major cause is that users generate a large quantity of unnecessary strokes when writing. When a user writes on the intelligent electronic whiteboard, the user usually revises and edits written content repeatedly as ideas evolve during writing, which may result in loss of important information. When a plurality of users use the electronic whiteboard, they may write simultaneously or overwrite existing content on a same whiteboard page. As a result, handwriting cannot be accurately recognized, and important information is lost. When the whiteboard is used for a meeting, numerous unnecessary strokes, such as emphasis lines, underlines, and circles, are drawn for different key points, which diminishes the prominence of essential content. In this case, if the user wants to save clear and well-organized written content, the user can only erase and rewrite the content, or frequently perform manual or automatic whiteboard page saving during writing. This greatly affects input efficiency and degrades user experience.

For ease of understanding, with reference to the accompanying drawings and application scenarios, a whiteboard page display method according to embodiments of this application is specifically described.

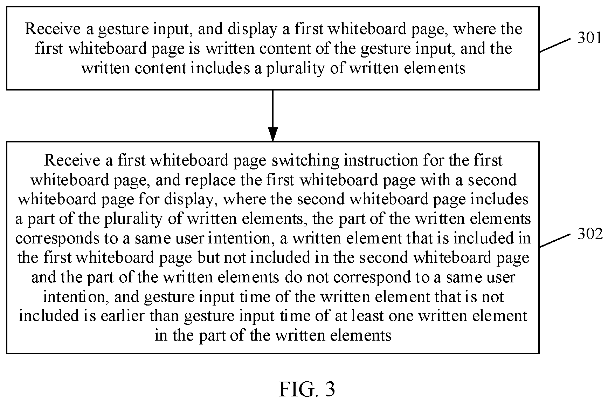

Refer to FIG. 3. FIG. 3 is a schematic flowchart of a whiteboard page display method according to an embodiment of this application. As shown in FIG. 3, the whiteboard page display method according to embodiments of this application includes the following steps.

301: Receive an input, and display a first whiteboard page, where the first whiteboard page is written content of the input, and the written content includes a plurality of written elements.

The input may specifically be a gesture input, or an input performed through an external device, for example, a writing or drawing input performed using a mouse. For ease of description, in embodiments of this application, the gesture input is mainly used as an example for description.

In a possible implementation, the user may enter handwritten content by using the gesture input, so that a corresponding whiteboard page is displayed on an electronic device. The entered handwritten content may include a plurality of written elements, where the written element may be one or more complete strokes.

In a possible implementation, data of the gesture input of the user may be obtained.

In embodiments of this application, the gesture input may be a contact gesture input, and the electronic device may detect a contact gesture on a touchscreen.

The touchscreen may include a touch-sensitive surface, a sensor, or a sensor group that receives an input from the user based on tactile contact. "Detecting the contact gesture on the touchscreen" may be understood as detecting the contact gesture on the touch-sensitive surface of the touchscreen.

First, a device and a module related to detection of the contact gesture on the touchscreen are described.

In a possible implementation, the touchscreen may cooperate with a detection module to detect the contact gesture on the touchscreen. The detection module may be a program, a data structure, or a subset of a data structure that is related to contact gesture detection and that is stored in a memory. Alternatively, one part of the detection module exists in a memory in a form of a program, a data structure, or a subset of a data structure, and the other part of the detection module is in a form of a hardware logic module. The touchscreen may capture contact data, and the detection module may perform, based on contact data, various operations related to contact gesture detection.

In a possible implementation, the touchscreen may capture, in real time, contact data (for example, an electrical signal) generated by the user contacting with the touch-sensitive surface, and transfer the contact data to the detection module. The detection module may perform, based on the contact data, various operations related to contact gesture detection.

The following describes detection implemented by the detection module on the contact gesture on the touchscreen.

In an implementation, the detection module may determine, based on the contact data, a magnitude of an intensity generated when the user comes into contact with the touchscreen and/or a change in the magnitude, and a size of a contact region and/or a change in the size, so as to determine a gesture type of the contact gesture based on the foregoing information.

The "intensity" may be understood as a force or pressure (force per unit area) of contact (for example, contact by using a side surface of a hand) on the touch-sensitive surface of the touchscreen. The contact intensity may be determined by using a plurality of methods and a plurality of sensors or a combination of sensors. For example, forces at different points on the touch-sensitive surface of the touchscreen are measured below the touch-sensitive surface, for example, by using one or more sensors adjacent to the touch-sensitive surface. In some specific implementations, the contact intensity may be determined by combining (for example, performing weighted averaging on) force measurements that are from a plurality of sensors. In addition, a size of a contact region detected on the touch-sensitive surface and/or a change in the size, a capacitance of the touch-sensitive surface near the contact region and/or a change in the capacitance, and/or a resistance of the touch-sensitive surface near the contact region and/or a change in the resistance may also be used to indirectly represent a contact force or contact pressure on the touch-sensitive surface.

The "contact region" may be understood as a region that can be detected and that is in contact with the touch-sensitive surface. The region may be a continuous region or a discrete region including dense touch points (for example, the contact region may be a long strip region including a group of densely distributed touch points).

The detection module may perform, based on the contact data, various operations related to contact gesture detection, to determine a gesture type of the contact gesture, a movement status of the contact gesture, a stop status of the contact gesture, and the like.

For example, the detection module may determine whether contact has occurred and a type of the contact gesture (for example, detect a finger press event or a contact event on the side surface of the hand), determine whether there is movement of the contact and track the movement on the touch-sensitive surface (for example, detect one or more finger drag events or a drag event on the side surface of the hand), and determine whether the contact has stopped (for example, detect a finger lift event or detect a lift event on the side surface of the hand).

The foregoing "movement of the contact gesture" may also be referred to as movement of the contact region of the contact gesture, and data related to the movement of the contact region may include but is not limited to a rate (a magnitude), a speed (a magnitude and a direction), and/or an acceleration (a change in a magnitude and/or a direction) of the movement of the contact region.

In a possible implementation, data entered through the gesture may include at least one of the following: static features of the written elements, a relationship between static features of adjacent written elements in space, a relationship between static features of adjacent written elements in time, and action features of the written elements.

In an electronic device with an electronic whiteboard, writing on the electronic whiteboard by a user usually generates writing information, which relates to stroke track information. When the user writes on the electronic whiteboard, a series of stroke tracks are generated, and these tracks may be represented by a sequence of coordinate points. In a device with a pressure sensor, the following is further included: stroke pressure information, where in this case, the electronic whiteboard records stroke pressure when the user writes, and this may be used to determine thickness and darkness of writing of the user; stroke speed information, where a stroke speed at which the user writes may also be recorded, and this may be used to determine smoothness and coherence of writing of the user; stroke direction information, where a stroke direction in which the user writes may also be recorded, and this may be used to determine a direction and a tilt of writing of the user; stroke color information, where the electronic whiteboard usually supports strokes in a plurality of colors, and a color used when the user writes may also be recorded; and stroke timestamp information, where the electronic whiteboard usually records a timestamp when the user writes, and this may be used to determine a speed and rhythm of writing of the user. There may also be action information, for example, the user performing erasing, circle-selection, or moving a part.

For example, refer to FIG. 5A-1 to FIG. 5A-3. The data of the input gesture in FIG. 5A-1 to FIG. 5A-3 may include single-stroke features, features of adjacent strokes in space K, features of adjacent strokes in time K, and action features. The single-stroke features include a stroke projection length, curvature, and a center of gravity, a stroke Bbox length and width, and stroke convex hull geometric features. The features of the adjacent strokes in space K include a distance between a start point and an end point of the adjacent strokes and a center of gravity of the adjacent strokes. The features of the adjacent strokes in time K include an average value and a variance of point counts, and a distance between centers of gravity of the adjacent strokes. The action features include an action speed, an action type, an action track point count, and an action contact area.

In embodiments of this application, features are constructed based on time, space, and semantic information of a stroke, so that a recognition result is more accurate.

After the data entered through the gesture is recorded, the data entered through the gesture may be cached, and subsequent redundant information identification and whiteboard page generation operations are performed only when the user requests to switch the whiteboard page, thereby reducing overheads of compute resources.

The redundant information identification may include type identification of the gesture input. In other words, various types of information generated when the user writes may be cached. If a classification engine is resident, a large quantity of compute resources and memory resources of the device are occupied, which may cause frame freezing of the device and affect normal running of other functions. To reduce resource occupation, in this technology, the stroke classification engine is not resident in the background, and a cache engine is resident. Information of writing and operations of the user is cached in the memory, so as to facilitate subsequent classification and calculation operations.

302: Receive a first whiteboard page switching instruction for the first whiteboard page, and replace, based on the first whiteboard page switching instruction, the first whiteboard page with a second whiteboard page for display, where the second whiteboard page includes a part of the plurality of written elements, the part of the written elements corresponds to a same user intention, a written element that is included in the first whiteboard page but not included in the second whiteboard page and the part of the written elements do not correspond to a same user intention, and input time of the written element that is not included is earlier than input time of at least one written element in the part of the written elements.

When key content cannot be identified or a whiteboard page is disordered due to interference information (for example, redundant written content or written content entered by different users), in embodiments of this application, redundant information in the whiteboard page can be identified, and the redundant information can be removed to reproduce a whiteboard page that includes key information. The redundant information may be considered as information that is different from a main semantic meaning of the whiteboard page. When entering information, a user usually has one or more input intentions. In other words, a part of gesture inputs of the user may correspond to a same user intention, and another part of the gesture inputs may correspond to another user intention. Alternatively, written content entered by different users may correspond to different user intentions. That the part of the gesture inputs may correspond to the same user intention described herein may be understood as that written content of non-redundant content entered by the user to express same theme content may correspond to a same user intention. Generally, the same theme content corresponds to a same semantic meaning.

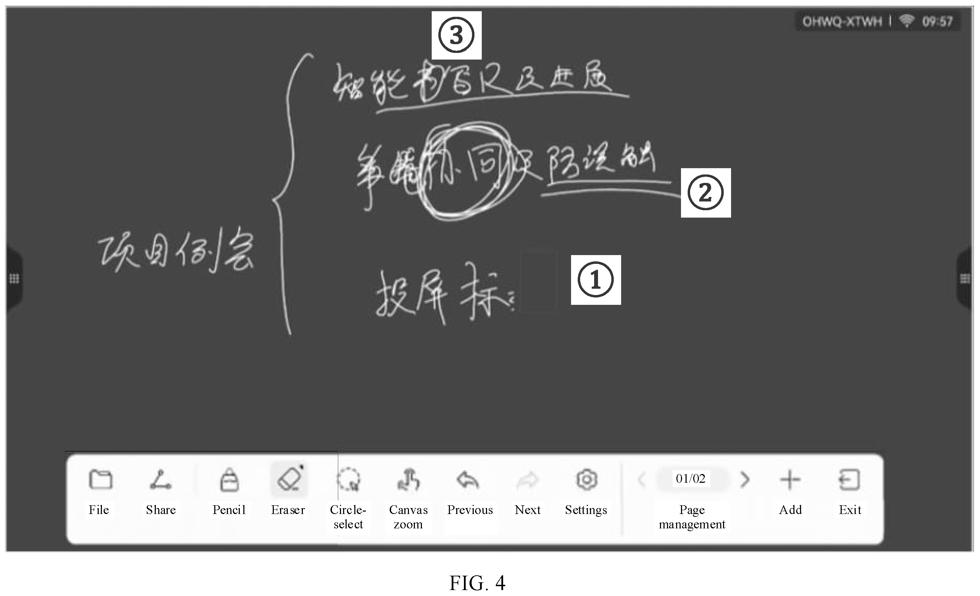

The redundant content may be understood as: When the content is missing, semantic integrity of the whiteboard page is not affected. For example, refer to FIG. 4. A plurality of circles and a double underline in written content in a region 2 in FIG. 1 may be considered as redundant content. When the content is missing, semantic integrity of the written content in the region 2 is not affected. For another example, refer to FIG. 4. A single circle and a single underline in written content in a region 3 in FIG. 1 may be considered as redundant content. When the content is missing, semantic integrity of the written content in the region 3 is not affected.

A train of thought of embodiments of this application is that gesture input information of the user may be recorded, and when the user needs to reproduce a historical whiteboard page (which may also be described as that the user requests to perform whiteboard page switching), redundant information in a whiteboard page may be removed, so that written content with a same user intention is reproduced. In this manner, the resulting whiteboard page can present more explicit and complete written content, thereby improving user experience.

In embodiments of this application, the second whiteboard page may be a whiteboard page obtained by reconstructing the first whiteboard page. Compared with the first whiteboard page, in the second whiteboard page, an element that does not belong to the same user intention is removed. Because the removal operation is not performed based on time similar to gesture input time of the user, input time of the removed element is earlier than input time of the part of the elements that are retained (a written element that is later than the removed element is retained because the written element and another retained element belong to a same user intention).

In embodiments of this application, the first whiteboard page may be a whiteboard page obtained after the gesture input of the user is received. The user usually has a plurality of themes during entering or may enter some content that visually affects important content (namely, redundant content). In this case, the user may have a requirement to reproduce one or more specified historical whiteboard pages. Each whiteboard page may correspond to one user intention, so that the user can easily view whiteboard page content that is clear and has a definite theme. Written content having the same user intention may be content that has a same semantic meaning and includes no redundant information.

When the user expects to reproduce the one or more specified historical whiteboard pages, the user may enter the first whiteboard page switching instruction for the first whiteboard page. The first whiteboard page switching instruction may instruct to reconstruct a whiteboard page based on a part or all of the written content in the first whiteboard page.

For example, in a possible implementation, a selection instruction for a part of the written content in the first whiteboard page and a whiteboard page switching instruction for the part of the written content may be received.

For example, in a possible implementation, a selection instruction for all the written content in the first whiteboard page and a whiteboard page switching instruction for all the written content may be received.

For example, the selection instruction may be circle-selection or all-selection. For example, the user may tap a circle-select button, and manually or use a stylus to circle-select some content, or double-tap a circle-select button, to circle-select all pages.

In a possible implementation, some elements in the first whiteboard page may be further specified as not being eliminated during whiteboard page reconstruction. For example, a pin instruction for a target element in the plurality of written elements may be received, where the pin instruction instructs to keep displaying the target element when the first whiteboard page is replaced with the second whiteboard page (a reconstructed whiteboard page) for display. For example, circle-selected content may be identified as a minimum unit. The user may tap to select a unit, and may select to pin or eliminate the unit. In addition, same units may be identified, and an overall operation may be performed on the same units. After the unit is selected to be pinned or eliminated, the unit is not affected by sliding of a slider.

In the foregoing manner, space for optional operations is provided for the user, so that the user can select to pin or eliminate important unit information.

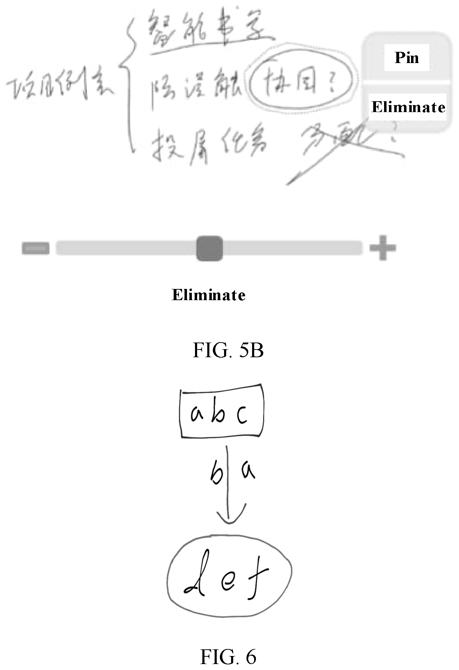

For example, refer to FIG. 5B. The user may select to-be-operated written content (for example, written content in a dashed circle), and the user may perform a pin operation or an elimination operation on the circle-selected content by interacting with a control.

In a possible implementation, subsequent redundant information identification and whiteboard page generation operations may be performed when the user requests to perform whiteboard page switching.

In a possible implementation, the detection module may perform, based on the data entered by the gesture, various operations related to gesture detection, to determine a gesture type. The gesture type is, for example, but is not limited to, tapping, double tapping, touching and holding, dragging, static contact between the side surface of the hand and the touchscreen, dragging by the side surface of the hand, rotating by the side surface of the hand, double tapping by the side surface of the hand, and the like.

It should be understood that classification may also be that no specific type is identified, but only different types are distinguished, that is, clustering is performed.

In a possible implementation, the detection module may be a pre-trained neural network model, and the neural network model has a capability of identifying, based on data of an input gesture, a gesture type indicated by the contact gesture.

For example, refer to FIG. 5A-1 to FIG. 5A-3. A stroke relationship diagram may be obtained based on static features (for example, single-stroke features, features of adjacent strokes in space K, or features of adjacent strokes in time K) in the data entered through the gesture, and an action relationship diagram may be obtained based on action data, so as to obtain a feature vector of each stroke. Then, coarse classification and fine classification are performed to obtain classification results.

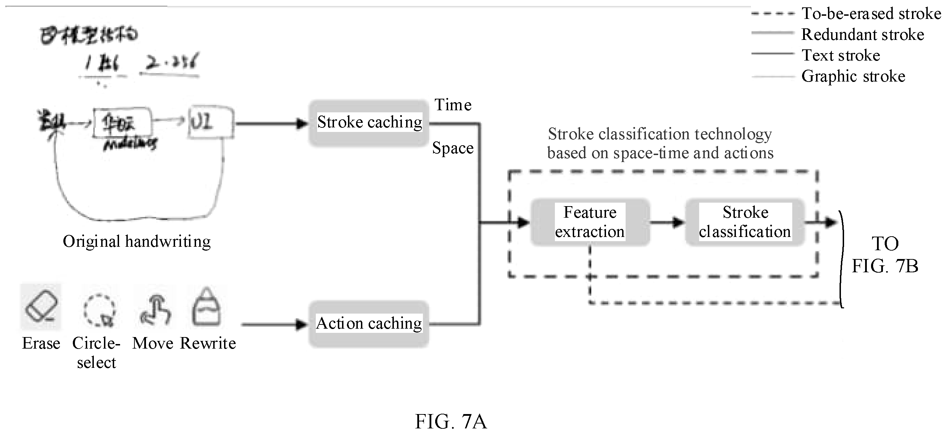

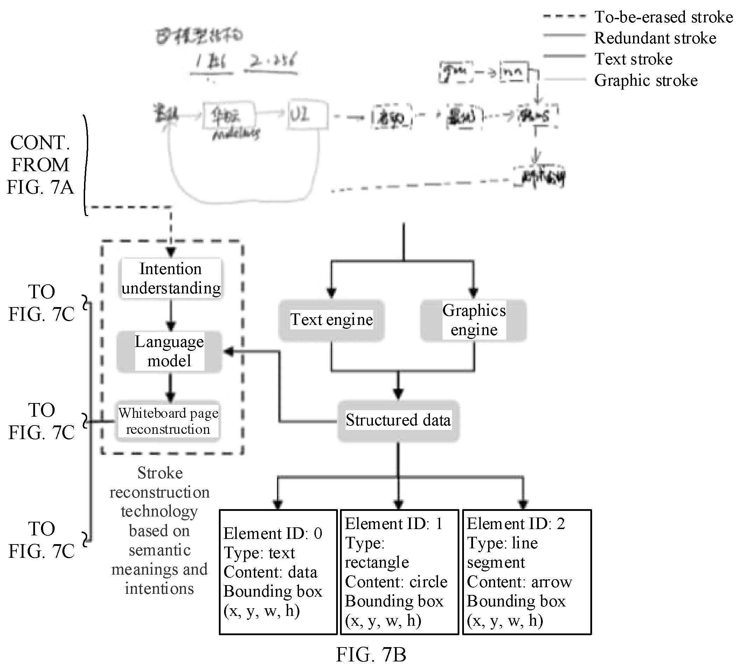

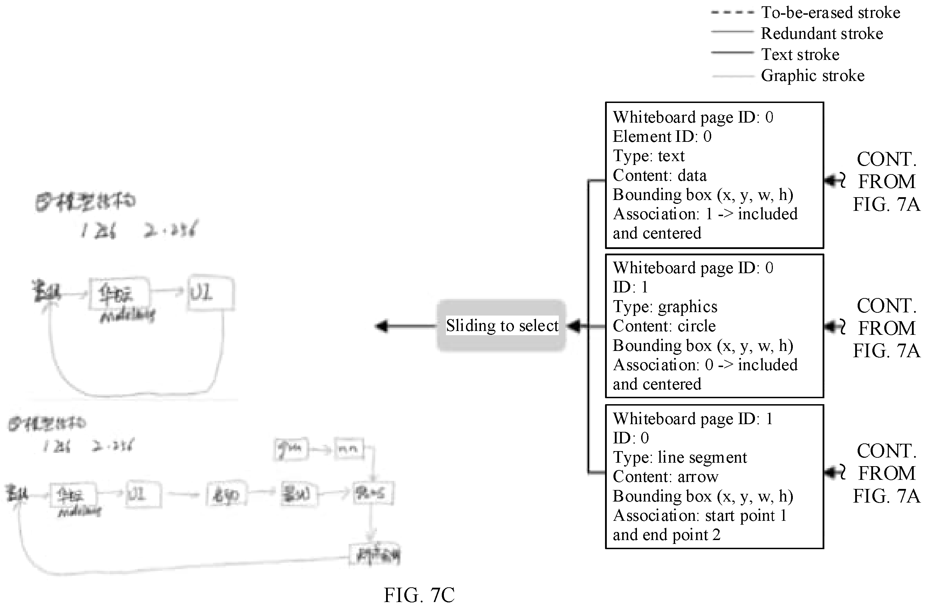

For example, refer to FIG. 6. FIG. 6 is a diagram of a classification result, where colors of different shades correspond to different categories. The information may be used as a reference factor for subsequent whiteboard page determining. Refer to FIG. 7A to FIG. 7C. FIG. 7A to FIG. 7C are a schematic flowchart of stroke classification.

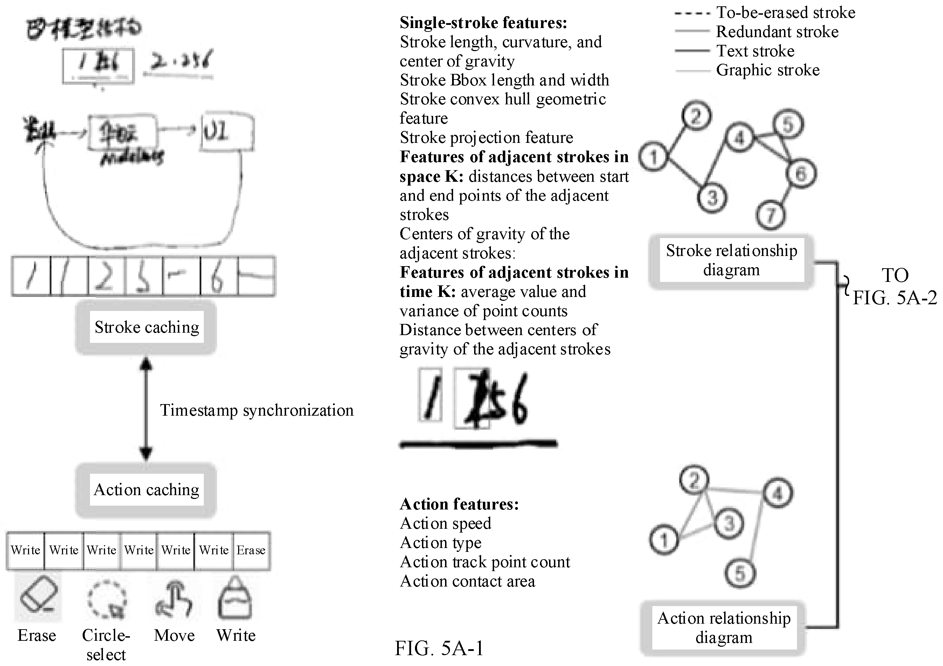

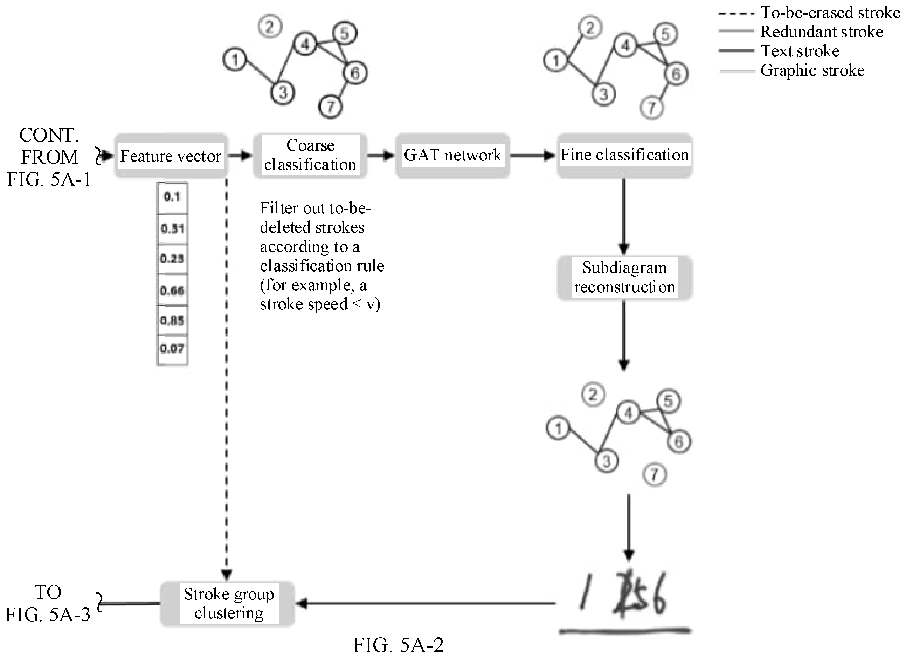

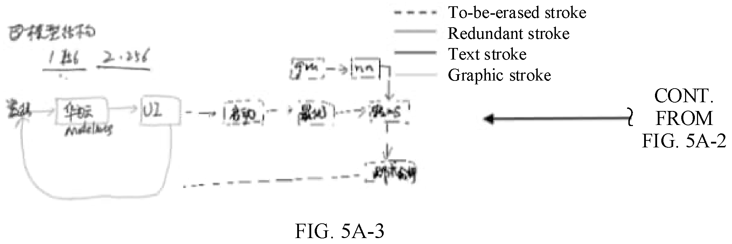

For a rule-based matching coarse classification module in FIG. 5A-2, to ensure that data obtained by a stroke classifier is sufficiently clean, the rule-based matching coarse classification module is constructed herein to remove non-man-made information or some noise from the data, for example, meaningless points, aimless strokes, or strokes whose writing speeds are less than a threshold, and remove such information from the data.

For a stroke classifier based on a deep neural network in FIG. 5A-2, this module trains a neural network based on attention to train a stroke classifier neural network. Through this module, feature data input in step e is classified, and strokes are classified into text, graphics, flowcharts, tables, or other types of data. Self-attention is calculated as follows: $Attention \left(Q, K, V\right) = softmax \left(\frac{{QK}^{T}}{\sqrt{{d}_{k}}}\right) V$

Here, Q, K, and V respectively represent a query, a key, and a value, *dₖ* is a feature dimension, and Q, K, and V are respectively: $Q = {W}^{Q} X ;$ $K = {W}^{K} X ;$ and $V = {W}^{V} X .$

It can be seen that a query, an index, and content of the self-attention are the query, the index, and the content. A core objective of the self-attention is to select information that is more critical to a current task objective from a large amount of information, and focus on the information.

In addition, position information of the written element may be determined based on the data of the input gesture, and the information may be used as a reference factor for subsequent whiteboard page determining.

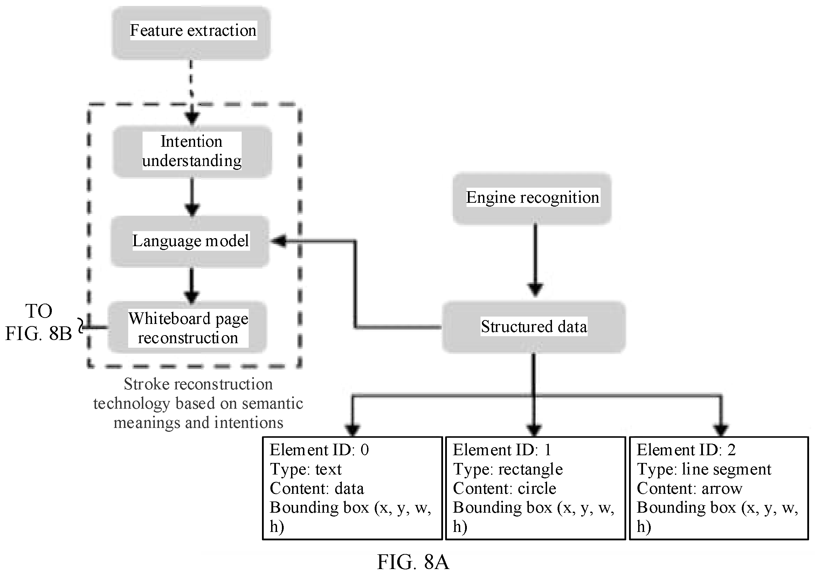

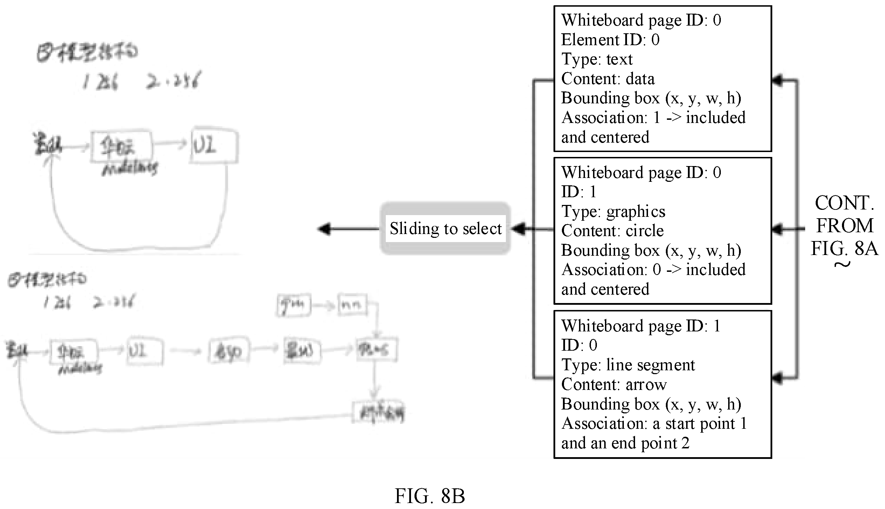

In a possible implementation, the foregoing types of data may be converted into structured data, and the structured data may be used as a reference factor for subsequent whiteboard page determining. Specifically, with reference to FIG. 8A and FIG. 8B, the structured data may be fed into a language model, so that the language model generates a whiteboard page (which may also be referred to as whiteboard page reconstruction).

In a possible implementation, intentions of input gestures may be further understood based on data of the input gestures. For example, the data of the input gestures may be processed through the neural network, to obtain an intention classification of each input gesture, that is, to identify input gestures that correspond to a same user category. The information may be used as a reference factor for subsequent whiteboard page determining.

In an identification scenario, after content entered by the user is classified by the classification engine, different types of data, such as text data, graphic data, and table data, are generated. However, the classification engine does not specifically recognize content of the data.

After the data is obtained, the data is sent to various models according to an existing method. For the text data, various text recognition technologies are used, including but not limited to processing technologies such as text recognition, word segmentation, part-of-speech tagging, and named entity recognition, and results are fed back to the user. For the graphic data, graphics may be segmented, recognized, and classified, and each node and connection line in the graphics may be recognized, so as to restore a complete printed flowchart.

Actually, the present invention is also designed based on this process. The module includes but is not limited to a text recognition engine, a multi-language recognition engine, a graphic recognition engine, a table recognition engine, and the like. The module may have a plurality of engines based on a quantity of classification engines. Therefore, there is an additional multi-engine scheduling module herein for scheduling a corresponding engine for each of a plurality of recognition tasks and performing model collaboration. For a specific solution, refer to the diagram in FIG. 8A and FIG. 8B.

For example, refer to FIG. 9A-1 to FIG. 9A-3. In FIG. 9A-1 to FIG. 9A-3, intentions (for example, an intention 1 and an intention 2 shown in the figure) may be recognized for input gestures, and then structured data and intention categories of the input gestures are input into a language model, so that the language model generates whiteboard pages (which may also be referred to as whiteboard page reconstruction).

The following describes reconstructed whiteboard page information in embodiments of this application.

For example, the first whiteboard page is reconstructed to obtain the second whiteboard page. The second whiteboard page may include the part of the written content in the first whiteboard page, and the part of the content corresponds to the same user intention, that is, written content that has a same semantic meaning and includes no redundant information. In the foregoing manner, the written content can be reconstructed in a structured manner in a writing process, thereby greatly improving input efficiency and experience of the user. In addition, because the reconstructed whiteboard page may correspond to one user intention, the user can easily view whiteboard page content that is clear and has a definite theme.

In a possible implementation, a part of the written elements in the first whiteboard page may be made to disappear in sequence until the second whiteboard page is displayed.

In a possible implementation, the part of the written elements in the first whiteboard page may be made to disappear in sequence based on degrees of relevance between the written elements and the user intention. For example, a degree of relevance between the redundant information and the user intention is usually small (the relevance may be identified based on a neural network, and a specific degree of relevance may be obtained through learning by the neural network).

In a possible implementation, the written elements in the first whiteboard page may be gradually eliminated (for example, stroke elements having a lower degree of relevance are first eliminated based on the degree of relevance between the written elements and the user intention), and the user may select how many strokes are to be eliminated. For example, when elimination proceeds to the second whiteboard page and the user considers that the second whiteboard page is a desired whiteboard page, the second whiteboard page is then displayed.

The foregoing gradual elimination process of the writing strokes may be implemented by the user through a sliding operation. In other words, in a possible implementation, the first whiteboard page switching instruction is generated in response to a sliding operation on a slider.

For example, the sliding operation on the slider may have two directions, and different directions correspond to different temporal directions of the input. Sliding to the left may be gradual elimination, and sliding to the right may be gradual restoration.

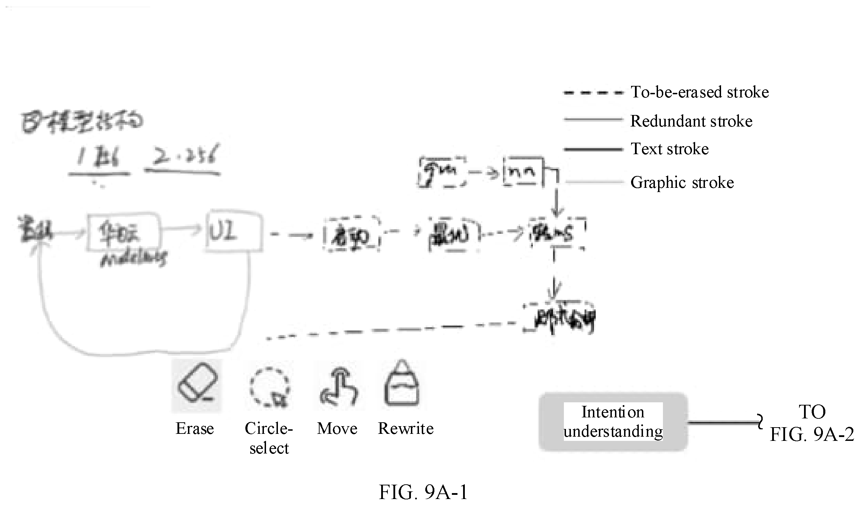

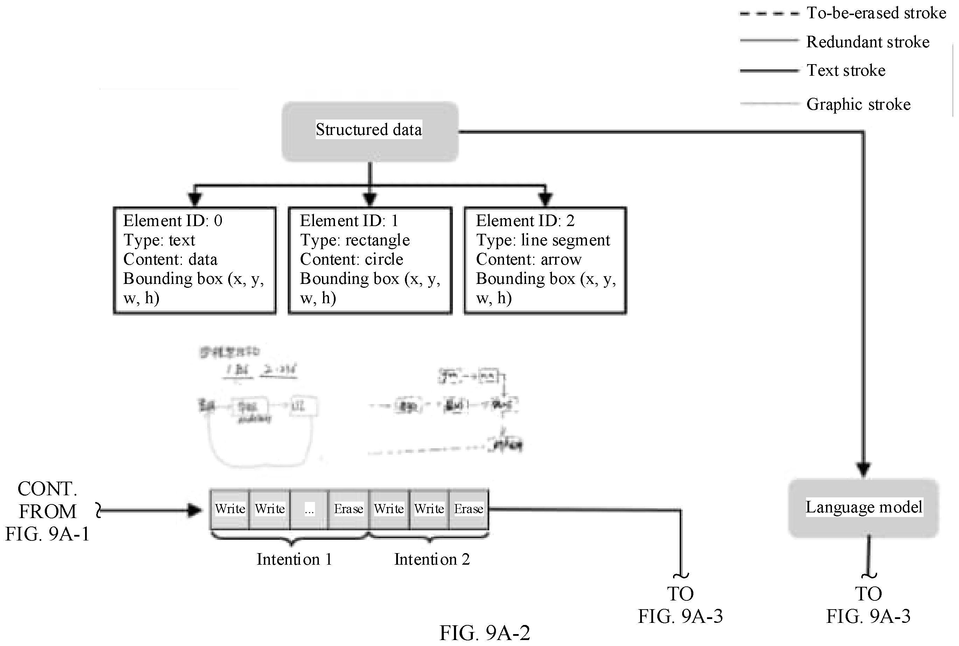

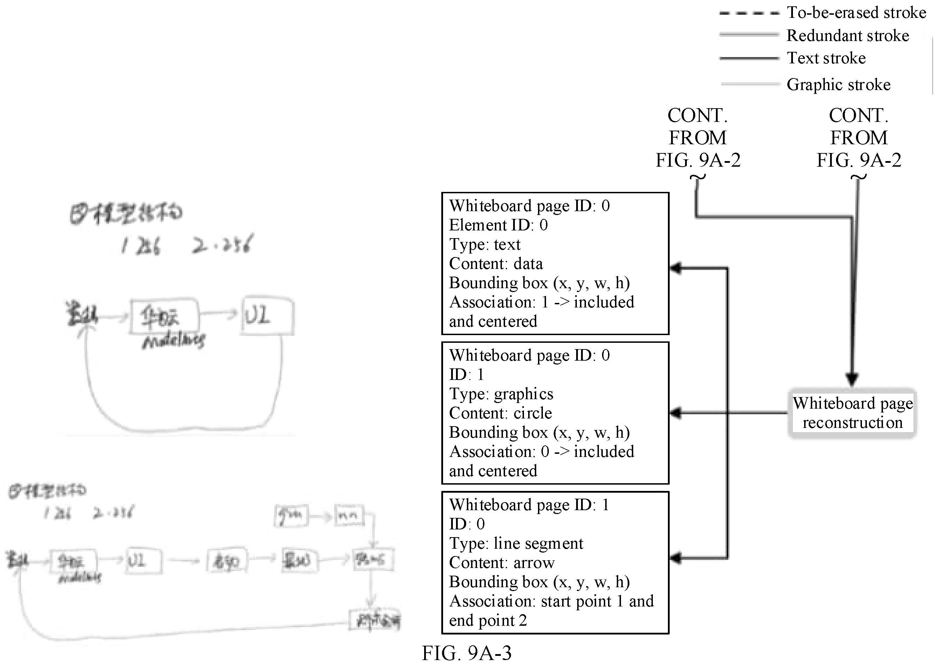

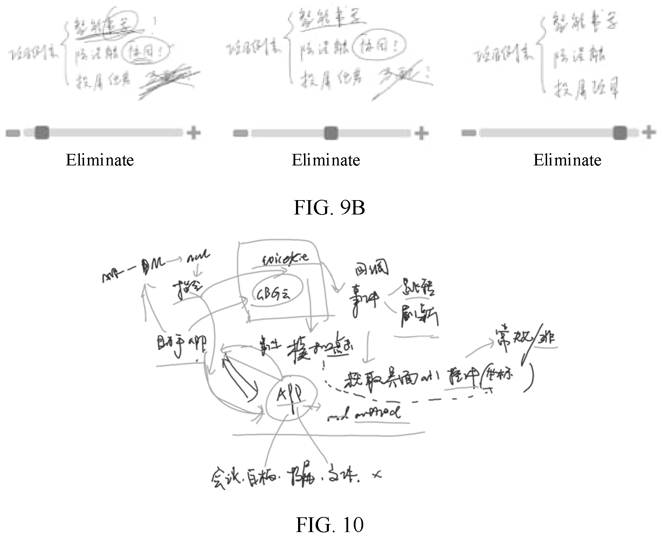

For example, when selecting a whiteboard page that needs to be reconstructed, the user may invoke the slider. If a part of the content is circle-selected, a lower part of the circle-selected content is at an invoking position of the slider. If the content is all selected, the invoking position is a lower part of the screen. An example of a representation of an operation of the user on the slider may be shown in FIG. 9B. The user may slide the slider to select a quantity of redundant strokes that are to be eliminated, to prevent loss of important information in an intermediate process.

In addition to the operation on the slider, a plurality of candidate whiteboard pages may be further presented, where each candidate whiteboard page corresponds to the same user intention, and different candidate whiteboard pages are different from one another. The user selects a to-be-displayed whiteboard page from the plurality of candidate whiteboard pages. In other words, in a possible implementation, the first whiteboard page switching instruction is generated in response to an operation on the plurality of candidate whiteboard pages, each candidate whiteboard page includes a part of the plurality of written elements, each candidate whiteboard page corresponds to the same user intention, and different candidate whiteboard pages are different from one another.

For example, in a possible implementation, a system cache module always caches an original handwriting and an operation action in a handwriting process. In this case, the stroke classification engine sleeps. Then, when the user circle-selects a part on a whiteboard, the stroke classification engine is started, and stored strokes and operation actions are pre-processed to extract data features for sending to the stroke classification engine. The stroke classifier identifies text, graphics, tables, redundant strokes, and the like, and then sends the identified text, graphics, tables, redundant strokes, and the like to a corresponding recognition engine. In addition, when the data is sent to the recognition engine, an engine scheduling system schedules a recognition engine to perform targeted recognition on the data. The corresponding recognition engine sends a recognition result to a final reconstruction module. Finally, the reconstruction module performs whiteboard page analysis and element typesetting on the recognition result, provides a plurality of versions of results, performs importance ranking on the reconstructed whiteboard page based on the results provided by the recognition engine, and then sends the results to a display interface. The user slides the slider to select a result of eliminating or retaining the whiteboard page.

In a possible implementation, during whiteboard page reconstruction, display content of the plurality of candidate whiteboard pages including the second whiteboard page may be determined based on the data of the input gesture through the language model, where each candidate whiteboard page corresponds to the same user intention, and different candidate whiteboard pages are different from one another.

In a possible implementation, the recognition results based on the stroke classifier may be sent to the recognition engine. In a scenario in which the user completes writing and circle-selects a writing module, content of the circle-selected part has undergone feature extraction, noise reduction, or removal of meaningless strokes, and various labels are added to various pieces of feature data by the stroke classifier. In this case, the feature data is sent to different recognition engines based on the labels of the feature data. If there are a large quantity of labels and the feature data is not completely independent, the engines need to be scheduled for collaborative recognition. In a possible implementation, the recognition engines may perform scheduling and collaboration. This module is designed with multi-thread scheduling to resolve an engine scheduling problem. In actual use, the following scheduling algorithm may specifically be designed: a first-come-first-served scheduling algorithm, a shortest-job-first scheduling algorithm, a priority scheduling algorithm, a round robin scheduling algorithm, or other scheduling algorithms.

In a possible implementation, the data may be recognized through various engines. Because data of handwritten strokes usually carries time sequence information, and the device usually retains timestamp information when the user writes, optionally, the recognition engine in embodiments of this application may be based on but not limited to an LSTM as the recognition engine. For example, for a handwritten English recognition engine, multi-thread scheduling invokes the English recognition engine. The feature data is sent by the classification engine to an LSTM network for sequence modeling, to obtain an output at each sequence step, and finally classification is performed to obtain a final recognition result.

When the user pauses writing and performs circle-selection, a circle-select option may include a partial circle-select option or an all-whiteboard-page circle-select option. If the user selects the all circle-select option, a stroke and whiteboard page reconstruction engine is started to analyze and reconstruct a whiteboard page. A main function of the module is to obtain different overall information generated in the writing process, and typeset the information in a structured manner for display. For example, when the user writes following a train of thought, the user may repeatedly edit content, which may cause loss of important information in an intermediate process. In this case, the module retains K whiteboard pages through the language model based on an understanding of an intention of the user, reconstructs the whiteboard pages, and allows the user to select a whiteboard page by sliding. A specific solution may be shown in FIG. 9A-1 to FIG. 9A-3.

In addition, the recognition result based on the recognition engine may be further sent to a stroke reconstruction module. After the recognition engine recognizes various types of results and structures the results, the data is sent to the stroke reconstruction module. An overall stroke reconstruction technology based on a semantic meaning and an intention may be shown in FIG. 10. Structured data includes data such as an element index, a data type, data content, and a bounding box. The structured data is sent to the language model, and the language model provides a confidence score of text. Finally, the data is sent to the reconstruction module. In an early feature extraction module, feature extraction data is sent to an intention understanding module via one branch. After determining of the intention understanding module, strokes are divided into different parts based on different intentions and are labeled. Then, the data is sent to the reconstruction module.

In this case, the whiteboard page reconstruction module has received a final content result obtained after processing by the language model and the stroke intention labels in a one-to-one correspondence with the content. The reconstruction module typesets and reconstructs the strokes based on the information, and divides reconstructed strokes into different whiteboard pages for sending to a display layer.

At the functional performance level, there are two parts: partial circle-selection recognition and all circle-selection recognition. In the partial circle-selection recognition, redundant strokes are finally changed when the slider displayed by the system is moved. In the all circle-selection recognition, the whiteboard page and redundant strokes are changed when the slider is moved. The circle-selected content can also be selected, eliminated, or pinned, and is not affected by the slider.

The following describes an application example of this application with reference to accompanying drawings.

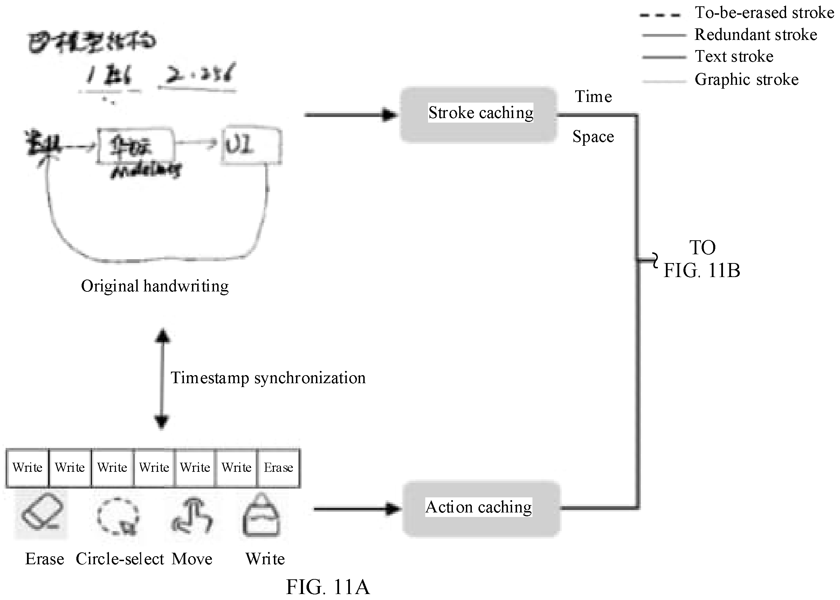

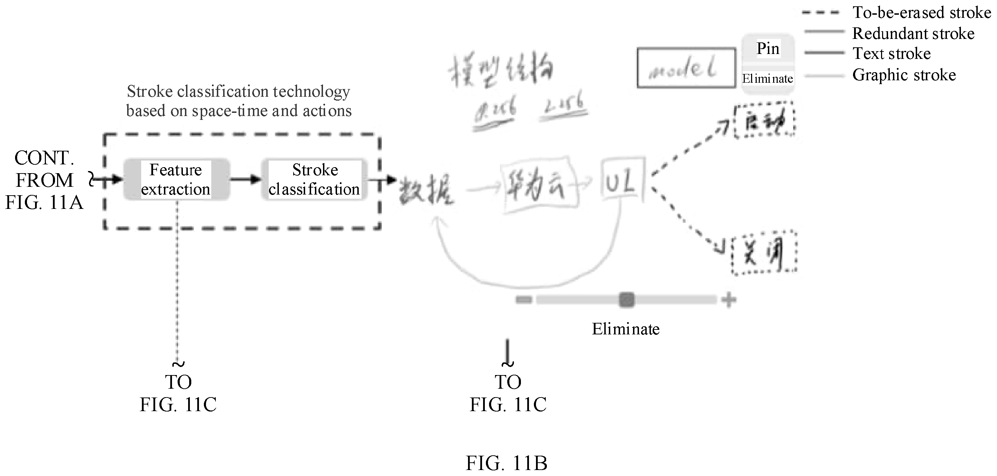

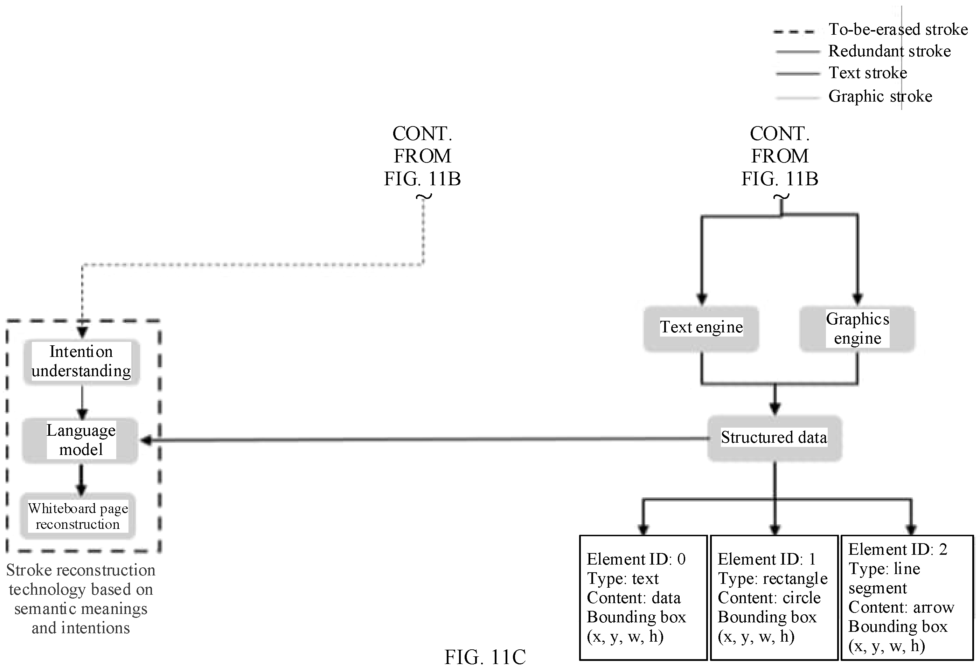

FIG. 11A to FIG. 11C are a schematic flowchart of whiteboard page reconstruction. As shown in FIG. 11A to FIG. 11C, the user may perform entering on the electronic whiteboard, and generated information includes stroke information, action information, and timestamp information. The action information includes but is not limited to information such as erasing information, gesture-based removal of information, undoing information, deleting information, tapping information, circle-selecting information, and rewriting information.

To reduce resource occupation, the cache module stores all information generated by writing of the user in the memory, so as to facilitate subsequent calculation operations.

When the user performs circle-selection on a part, the feature extraction module is first invoked, feature extraction is performed, based on a feature design, on the data of the module cached in the memory, for sending to the stroke classification engine and the stroke reconstruction module.

The stroke classifier classifies features into different types of data, such as text, graphics, charts, and flow lines, and adds category labels to the feature data, for sending to the next module.

In this case, the stroke recognition engine invokes various recognition engine modules in a multi-thread manner to recognize the data based on the data transferred from the upper layer, that is, to recognize specific content of various types of data, for example, to recognize words in the text data and graphics in the graphics data.

Data results obtained through recognition by the recognition engine are integrated, where each piece of data includes a data index, a data type, data content, and bounding box information. Then, the data is sent to the language model module in the stroke reconstruction module.

The language model performs confidence scoring on recognition results to obtain the most reasonable result, and sends the result to the whiteboard page reconstruction module for final integration.

In addition, the written content may be recognized and classified into units at a minimum understandable granularity through a stroke classification text recognition engine, for the user to select. When the user taps the units, a pin button, a cancel button, and a multi-select button are displayed. The multi-select function is used to select similar units. After the user selects to pin or cancel a unit, the unit does not participate in whiteboard page reconstruction and analysis.

For example, analysis may be performed only for the circle-selected module. In other words, there is no intention analysis and multi-whiteboard page results in the module. For the module, only redundant strokes are removed from the current single whiteboard page, and a slider is provided at a display layer, for sliding the slider to select a quantity of redundant strokes to be eliminated.

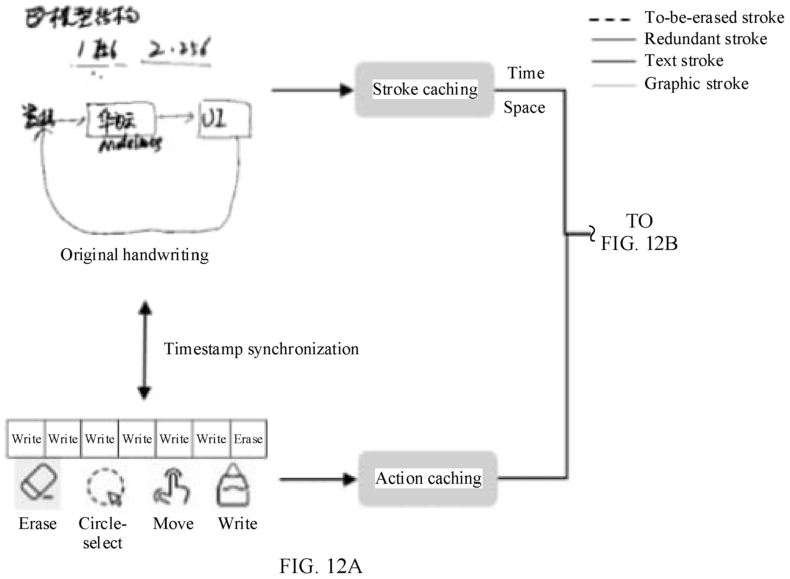

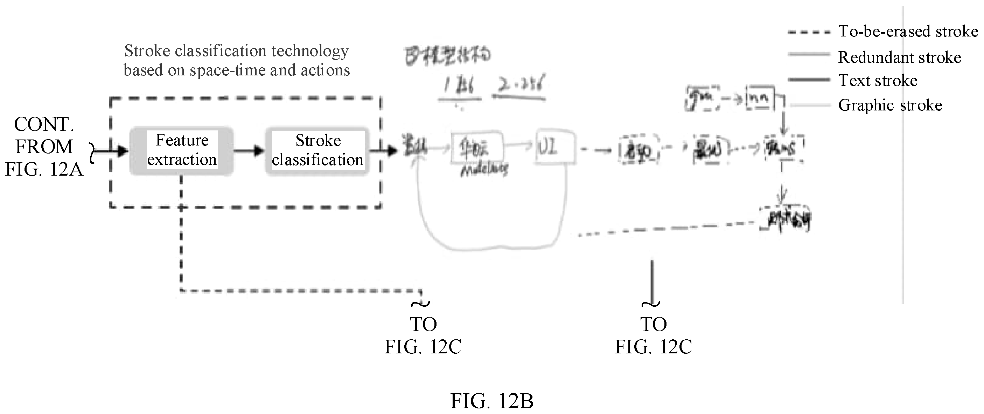

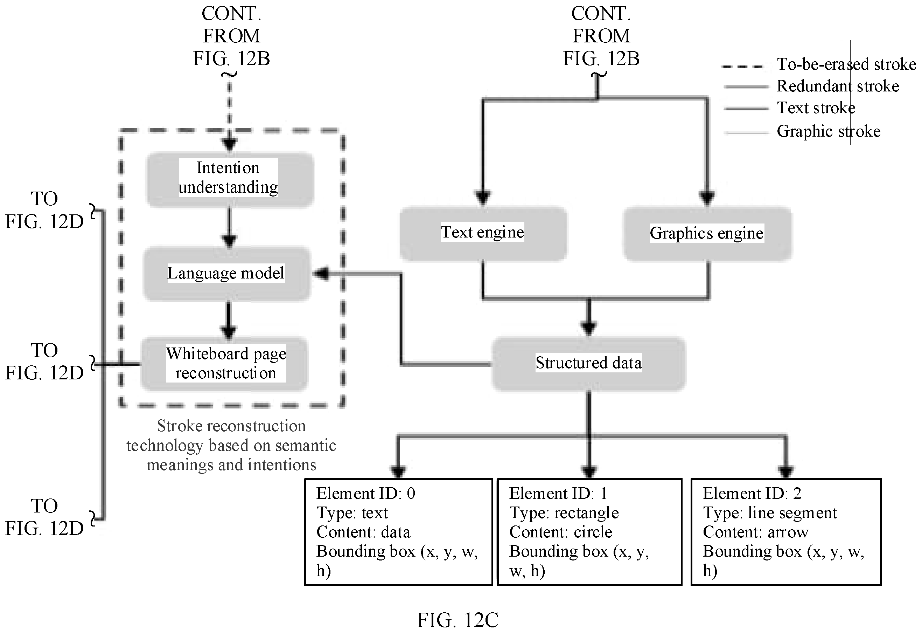

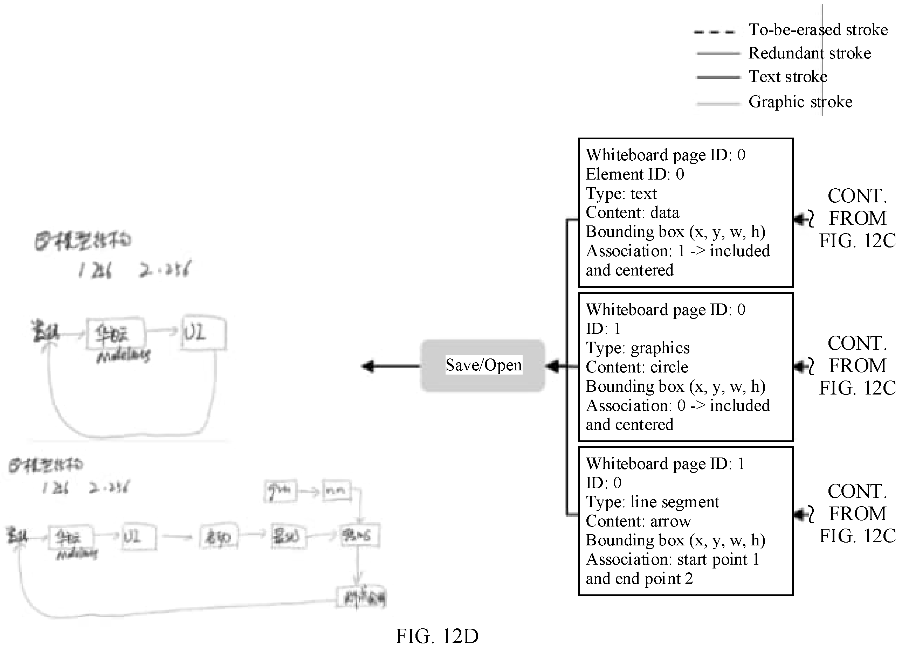

Refer to FIG. 12A to FIG. 12D. FIG. 12A to FIG. 12D are an application diagram in a handwriting recognition scenario according to an embodiment of this application. The whiteboard page reconstruction module may map final results to intention labels in s one-to-one correspondence, place recognition results of a same intention in a same whiteboard page in a final typesetting format, and provide multi-whiteboard page display.

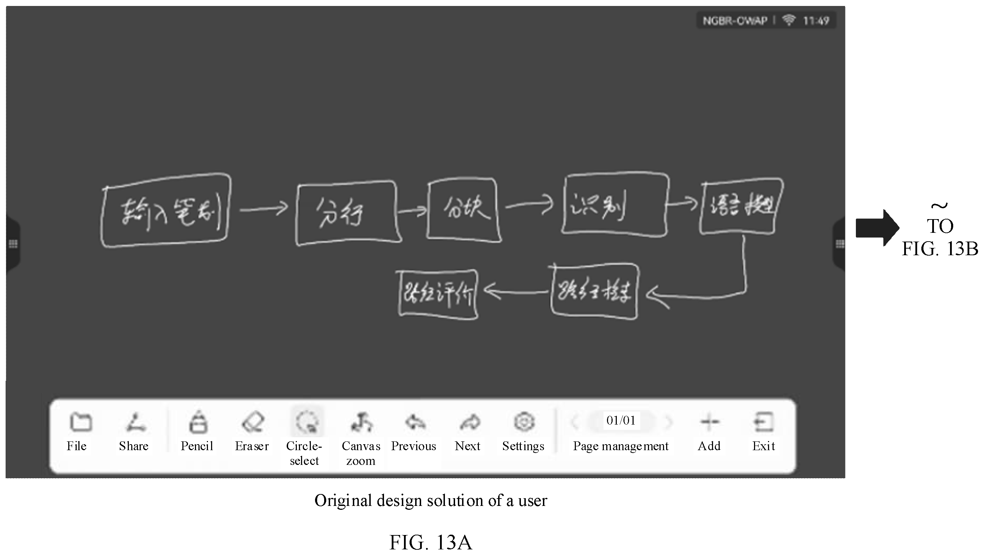

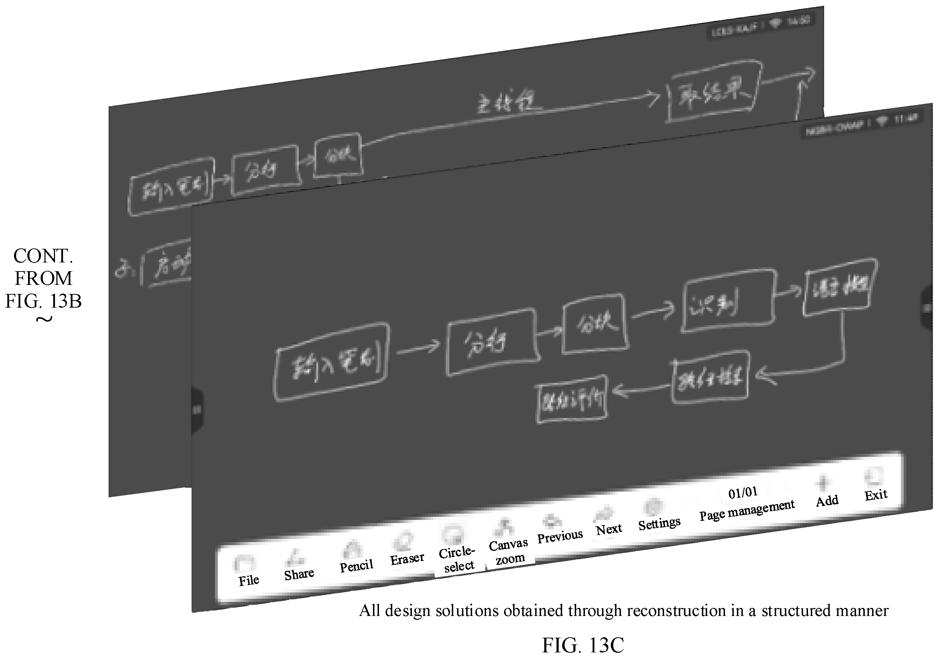

Refer to FIG. 13A to FIG. 13C. FIG. 13A to FIG. 13C are an application diagram of reconstructing content of lost information caused by overlapping writing by a plurality of users on a same whiteboard page according to an embodiment of this application.

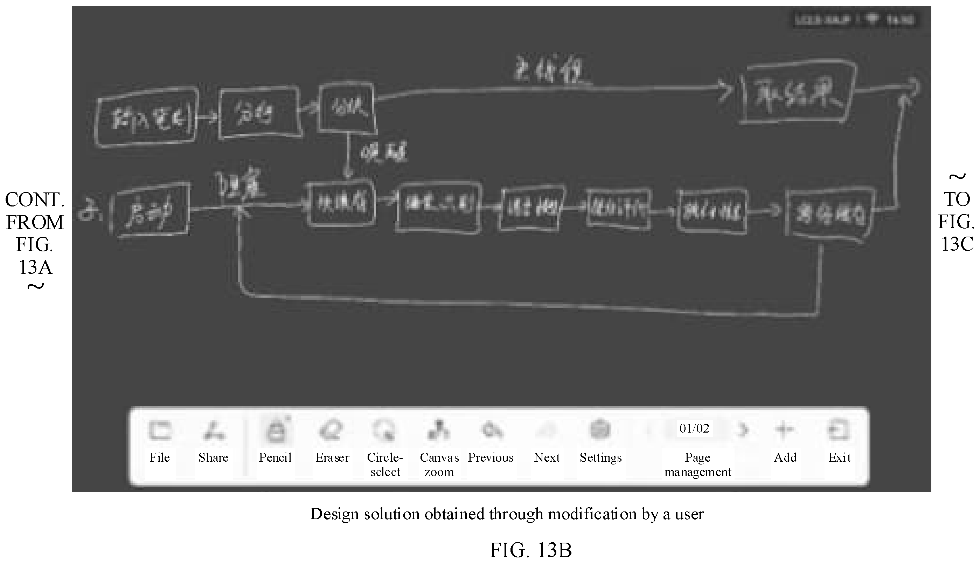

As shown in FIG. 13A, a user 1 writes his or her own solution based on a train of thought. A user 2 continues to modify and add. In FIG. 13B, the user 2 may perform rewriting or edition on a whiteboard page of the user 1, resulting in loss of some information written by the user 1.

Refer to FIG. 14. FIG. 14 is a diagram of a structure of a whiteboard page display apparatus according to an embodiment of this application. The apparatus is applied to an electronic device. The apparatus 1400 includes:
a processing module 1401 and a display module 1402.

The processing module 1401 is configured to: receive an input, and control the display module 1402 to display a first whiteboard page, where the first whiteboard page is written content of the input, and the written content includes a plurality of written elements; and receive a first whiteboard page switching instruction for the first whiteboard page, and control, based on the first whiteboard page switching instruction, the display module to replace the first whiteboard page with a second whiteboard page for display, where the second whiteboard page includes a part of the plurality of written elements, the part of the written elements corresponds to a same user intention, a written element that is included in the first whiteboard page but not included in the second whiteboard page and the part of the written elements do not correspond to a same user intention, and input time of the written element that is not included is earlier than input time of at least one written element in the part of the written elements.

For specific descriptions of the processing module 1401, refer to the descriptions of step 301 and step 302. Details are not described herein again.

In a possible implementation, the written elements included in the second whiteboard page are determined based on whether corresponding user intentions are consistent.

In a possible implementation, the written element is one or more complete strokes.

The input may specifically be a gesture input.

In a possible implementation, the same user intention includes:
written elements entered by a same user; or
written elements that affect semantic integrity of written content included in the second whiteboard page when the written elements are missing.

In a possible implementation, the processing module 1401 is specifically configured to:
receive a selection instruction for a part of the written content in the first whiteboard page, and a whiteboard page switching instruction for the part of the written content, where the part of the written elements belongs to the part of the written content; or
receive a selection instruction for all the written content in the first whiteboard page, and a whiteboard page switching instruction for all the written content.

In a possible implementation, before replacing the first whiteboard page with the second whiteboard page for display, the processing module 1401 is further configured to:
receive a pin instruction for a target element in the plurality of written elements, where the pin instruction instructs to keep displaying the target element when the first whiteboard page is replaced with the second whiteboard page for display.

In a possible implementation, the first whiteboard page switching instruction is generated in response to a sliding operation on a slider.

In a possible implementation, the processing module 1401 is specifically configured to control the display module 1402 to cause a part of the written elements in the first whiteboard page to disappear in sequence until the second whiteboard page is displayed.

In a possible implementation, causing the part of the written elements in the first whiteboard page to disappear in sequence includes:
causing the part of the written elements in the first whiteboard page to disappear in sequence based on degrees of relevance between the written elements and the user intention.

In a possible implementation, the first whiteboard page switching instruction is generated in response to an operation on a plurality of candidate whiteboard pages, each candidate whiteboard page includes a part of the plurality of written elements, each candidate whiteboard page corresponds to the same user intention, and different candidate whiteboard pages are different from one another.

In a possible implementation, the processing module 1401 is further configured to:
cache data of the input corresponding to the first whiteboard page; and
determine display content of the second whiteboard page based on the data.

In a possible implementation, determining the display content of the second whiteboard page based on the data is performed after receiving the first whiteboard page switching instruction for the first whiteboard page.

In a possible implementation, the processing module 1401 is specifically configured to:
determine, based on the data through a language model, display content of the plurality of candidate whiteboard pages including the second whiteboard page, where each candidate whiteboard page corresponds to the same user intention, and different candidate whiteboard pages are different from one another.

In a possible implementation, the data includes at least one of the following:
static features of the written elements, a relationship between static features of adjacent written elements in space, a relationship between static features of adjacent written elements in time, and action features of the written elements.

The following describes a terminal device provided in an embodiment of this application. The terminal device may be the apparatus described in FIG. 14. Refer to FIG. 15. FIG. 15 is a diagram of a structure of a terminal device according to an embodiment of this application. The terminal device 1500 may specifically be represented as an electronic whiteboard, a virtual reality VR device, a mobile phone, a tablet, a notebook computer, an intelligent wearable device, or the like. This is not limited herein. Specifically, the terminal device 1500 includes a receiver 1501, a transmitter 1502, a processor 1503, and a memory 1504 (there may be one or more processors 1503 in the terminal device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a non-volatile random access memory (non-volatile random access memory, NVRAM). The memory 1504 stores processor and operation instructions, an executable module or a data structure, a subset thereof, or an extended set thereof. The operation instructions may include various operation instructions to implement various operations.

The processor 1503 controls an operation of the terminal device. In a specific application, components of the terminal device are coupled together through a bus system. In addition to a data bus, the bus system may include a power bus, a control bus, a status signal bus, and the like. However, for clear description, various types of buses in the figure are marked as the bus system.

The method disclosed in the foregoing embodiments of this application may be applied to the processor 1503, or implemented by the processor 1503. The processor 1503 may be an integrated circuit chip, and has a signal processing capability. In an implementation process, steps in the foregoing methods may be implemented by using a hardware integrated logical circuit in the processor 1503, or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503. Specifically, the processor 1503 may read the information in the memory 1504, and complete, in combination with the hardware of the processor 1503, related steps in step 301 to step 302 in the foregoing embodiments.

The receiver 1501 may be configured to: receive input digital or character information, and generate a signal input related to a related setting and function control of the terminal device. The transmitter 1502 may be configured to output digit or character information through a first interface. The transmitter 1502 may be further configured to send instructions to a disk group through the first interface, to modify data in the disk group. The transmitter 1502 may further include a display device, for example, a display.

An embodiment of this application further provides a computer program product. When the computer program product runs on a computer, the computer is enabled to perform the steps of the method described in embodiments corresponding to FIG. 3 in the foregoing embodiments.

An embodiment of this application further provides a computer-readable storage medium. The computer-readable storage medium stores a program for signal processing. When the program is run on a computer, the computer is enabled to perform the steps in the image processing method in the foregoing method embodiments.

The image display apparatus provided in embodiments of this application may be a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in an execution device performs the data processing method described in the foregoing embodiments, or a chip in a training device performs the data processing method described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

In addition, it should be noted that the described apparatus embodiments are merely examples. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may specifically be implemented as one or more communication buses or signal cables.

Based on the descriptions of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Generally, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, a software program implementation is a better implementation in most cases. Based on such an understanding, the technical solutions of this application essentially or the part contributing to the conventional technology may be implemented in a form of a software product. The computer software product is stored in a readable storage medium, like a floppy disk, a USB flash drive, a removable hard disk, a ROM, a RAM, a magnetic disk, or an optical disc of a computer, and includes several instructions for instructing a computer device (which may be a personal computer, a server, or a network device) to perform the methods described in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

## Claims

1. A whiteboard page display method, wherein the method comprises:
receiving an input and displaying a first whiteboard page, wherein the first whiteboard page is written content of the input, and the written content comprises a plurality of written elements; and
receiving a first whiteboard page switching instruction for the first whiteboard page, and replacing, based on the first whiteboard page switching instruction, the first whiteboard page with a second whiteboard page for display, wherein the second whiteboard page comprises a part of the plurality of written elements, the part of the written elements corresponds to a same user intention, a written element that is comprised in the first whiteboard page but not comprised in the second whiteboard page and the part of the written elements do not correspond to a same user intention, and input time of the written element that is not comprised is earlier than input time of at least one written element in the part of the written elements.

2. The method according to claim 1, wherein the written elements comprised in the second whiteboard page are determined based on whether corresponding user intentions are consistent.

3. The method according to claim 1 or 2, wherein the input is specifically a gesture input.

4. The method according to any one of claims 1 to 3, wherein the same user intention comprises:
written elements entered by a same user; or
written elements that affect semantic integrity of written content comprised in the second whiteboard page when the written elements are missing.

5. The method according to any one of claims 1 to 4, wherein receiving the first whiteboard page switching instruction for the first whiteboard page comprises:
receiving a selection instruction for a part of the written content in the first whiteboard page, and a whiteboard page switching instruction for the part of the written content, wherein the part of the written elements belongs to the part of the written content; or
receiving a selection instruction for all the written content in the first whiteboard page, and a whiteboard page switching instruction for all the written content.

6. The method according to any one of claims 1 to 5, wherein before replacing the first whiteboard page with the second whiteboard page for display, the method further comprises:
receiving a pin instruction for a target element in the plurality of written elements, wherein the pin instruction instructs to keep displaying the target element when the first whiteboard page is replaced with the second whiteboard page for display.

7. The method according to any one of claims 1 to 6, wherein the first whiteboard page switching instruction is generated in response to a slide operation on a slider.

8. The method according to any one of claims 1 to 7, wherein replacing the first whiteboard page with the second whiteboard page for display comprises:
causing a part of the written elements in the first whiteboard page to disappear in sequence until the second whiteboard page is displayed.

9. The method according to claim 8, wherein causing the part of the written elements in the first whiteboard page to disappear in sequence comprises:
causing the part of the written elements in the first whiteboard page to disappear in sequence based on degrees of relevance between the written elements and the user intention.

10. The method according to any one of claims 1 to 9, wherein the first whiteboard page switching instruction is generated in response to an operation on a plurality of candidate whiteboard pages, each candidate whiteboard page comprises a part of the plurality of written elements, each candidate whiteboard page corresponds to the same user intention, and different candidate whiteboard pages are different from one another.

11. The method according to any one of claims 1 to 10, wherein the method further comprises:
caching data of the input corresponding to the first whiteboard page; and
determining display content of the second whiteboard page based on the data.

12. The method according to claim 11, wherein determining the display content of the second whiteboard page based on the data is performed after receiving the first whiteboard page switching instruction for the first whiteboard page.

13. The method according to claim 11 or 12, wherein determining the display content of the second whiteboard page based on the data comprises:
determining, based on the data through a language model, display content of the plurality of candidate whiteboard pages comprising the second whiteboard page, wherein each candidate whiteboard page corresponds to the same user intention, and different candidate whiteboard pages are different from one another.

14. The method according to any one of claims 11 to 13, wherein the data comprises at least one of the following:
static features of the written elements, a relationship between static features of adjacent written elements in space, a relationship between static features of adjacent written elements in time, and action features of the written elements.

15. The method according to any one of claims 1 to 14, wherein the written element is one or more complete strokes.

16. A whiteboard page display apparatus, wherein the apparatus comprises a processing module and a display module, wherein
the processing module is configured to: receive an input, and control the display module to display a first whiteboard page, wherein the first whiteboard page is written content of the input, and the written content comprises a plurality of written elements; and receive a first whiteboard page switching instruction for the first whiteboard page, and control, based on the first whiteboard page switching instruction, the display module to replace the first whiteboard page with a second whiteboard page for display, wherein the second whiteboard page comprises a part of the plurality of written elements, the part of the written elements corresponds to a same user intention, a written element that is comprised in the first whiteboard page but not comprised in the second whiteboard page and the part of the written elements do not correspond to a same user intention, and input time of the written element that is not comprised is earlier than input time of at least one written element in the part of the written elements.

17. The apparatus according to claim 16, wherein the written elements comprised in the second whiteboard page are determined based on whether corresponding user intentions are consistent.

18. The apparatus according to claim 16 or 17, wherein the input is specifically a gesture input.

19. The apparatus according to any one of claims 16 to 18, wherein the same user intention comprises:
written elements entered by a gesture of a same user; or
written elements that affect semantic integrity of written content comprised in the second whiteboard page when the written elements are missing.

20. The apparatus according to any one of claims 16 to 19, wherein the processing module is specifically configured to:
receive a selection instruction for a part of the written content in the first whiteboard page, and a whiteboard page switching instruction for the part of the written content, wherein the part of the written elements belongs to the part of the written content; or
receive a selection instruction for all the written content in the first whiteboard page, and a whiteboard page switching instruction for all the written content.

21. The apparatus according to any one of claims 16 to 20, wherein before replacing the first whiteboard page with the second whiteboard page for display, the processing module is further configured to:
receive a pin instruction for a target element in the plurality of written elements, wherein the pin instruction instructs to keep displaying the target element when the first whiteboard page is replaced with the second whiteboard page for display.

22. The apparatus according to any one of claims 16 to 21, wherein the first whiteboard page switching instruction is generated in response to a slide operation on a slider.

23. The apparatus according to any one of claims 16 to 22, wherein the processing module is specifically configured to control the display module to cause a part of the written elements in the first whiteboard page to disappear in sequence until the second whiteboard page is displayed.

24. The apparatus according to claim 23, wherein causing the part of the written elements in the first whiteboard page to disappear in sequence comprises:
causing the part of the written elements in the first whiteboard page to disappear in sequence based on degrees of relevance between the written elements and the user intention.

25. The apparatus according to any one of claims 16 to 24, wherein the first whiteboard page switching instruction is generated in response to an operation on a plurality of candidate whiteboard pages, each candidate whiteboard page comprises a part of the plurality of written elements, each candidate whiteboard page corresponds to the same user intention, and different candidate whiteboard pages are different from one another.

26. The apparatus according to any one of claims 16 to 25, wherein the processing module is further configured to:
cache data of the gesture input corresponding to the first whiteboard page; and
determine display content of the second whiteboard page based on the data.

27. The apparatus according to claim 26, wherein determining the display content of the second whiteboard page based on the data is performed after receiving the first whiteboard page switching instruction for the first whiteboard page.

28. The apparatus according to claim 26 or 27, wherein the processing module is specifically configured to:
determine, based on the data through a language model, display content of the plurality of candidate whiteboard pages comprising the second whiteboard page, wherein each candidate whiteboard page corresponds to the same user intention, and different candidate whiteboard pages are different from one another.

29. The apparatus according to any one of claims 26 to 28, wherein the data comprises at least one of the following:
static features of the written elements, a relationship between static features of adjacent written elements in space, a relationship between static features of adjacent written elements in time, and action features of the written elements.

30. The apparatus according to any one of claims 16 to 29, wherein the written element is one or more complete strokes.

31. An electronic device, wherein the device comprises a processor, a memory, a display, and a bus, wherein
the processor, the memory, and the display are connected through the bus;
the memory is configured to store a computer program or instructions; and
the processor is configured to invoke or execute the program or the instructions stored in the memory, and is further configured to control a touchscreen to implement the method steps according to any one of claims 1 to 15.

32. A computer-readable storage medium, comprising a program, wherein when the program is run on a computer, the computer is enabled to perform the method according to any one of claims 1 to 15.

33. A computer program product comprising instructions, wherein when the computer program product runs on a terminal, the terminal is enabled to perform the method according to any one of claims 1 to 15.
